(19) Europäisches Patentamt
European Patent Office
Office européen des brevets

(11)  EP 2 502 121 B1

(12)  **EUROPEAN PATENT SPECIFICATION**

(45) Date of publication and mention
of the grant of the patent:
**26.12.2018  Bulletin 2018/52**

(21) Application number: **10832077.1**

(22) Date of filing: **17.11.2010**

(51) Int Cl.:
*G05D 5/00* *(2006.01)*          *G05D 23/19* *(2006.01)*
*F24F 11/00* *(2018.01)*          *F24F 11/49* *(2018.01)*
*F24F 11/30* *(2018.01)*

(86) International application number:
**PCT/US2010/056948**

(87) International publication number:
**WO 2011/062942 (26.05.2011 Gazette 2011/21)**

(54) **CONTROLLER FOR AUTOMATIC CONTROL AND OPTIMIZATION OF DUTY CYCLED HVAC&R EQUIPMENT, AND SYSTEMS AND METHODS USING SAME**

STEUERGERÄT ZUR AUTOMATISCHEN STEUERUNG UND OPTIMIERUNG EINER HVAC&R-ARBEITSZYKLUS-VORRICHTUNG SOWIE SYSTEME UND VERFAHREN DAMIT

UNITÉ DE COMMANDE POUR LA COMMANDE AUTOMATIQUE ET L'OPTIMISATION D'ÉQUIPEMENTS CVCA&R EN SERVICE, ET SYSTÈMES ET PROCÉDÉS L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.11.2009  US 262281 P**
**04.06.2010  US 794116**

(43) Date of publication of application:
**26.09.2012  Bulletin 2012/39**

(73) Proprietor: **Pacecontrols, LLC**
**York, PA 17401 (US)**

(72) Inventors:
• **KOLK, Richard, A.**
**York, PA 17401 (US)**
• **MILLS, Thomas, A.**
**York, PA 17401 (US)**

• **BUDNEY, Stanley, M.**
**York, PA 17401 (US)**

(74) Representative: **Pulieri, Gianluca Antonio**
**Jacobacci & Partners S.p.A.**
**Piazza della Vittoria, 11**
**25122 Brescia (IT)**

(56) References cited:
| | |
|---|---|
| US-A- 5 203 179 | US-A- 5 426 620 |
| US-A- 5 611 484 | US-A- 5 687 139 |
| US-A- 5 687 139 | US-A1- 2001 048 030 |
| US-A1- 2005 240 312 | US-A1- 2005 240 312 |
| US-A1- 2007 021 874 | US-B1- 6 349 883 |
| US-B2- 6 675 591 | US-B2- 7 055 759 |
| US-B2- 7 055 759 | US-B2- 7 394 217 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

This application claims the benefit of prior U.S. Provisional Patent Application No. 61/262,281, filed November 18, 2009, and U.S. Patent Application No. 12/794,116, filed June 4, 2010, which are incorporated in their entirety by reference herein.

The present invention relates to an electronic controller for automatically controlling and optimizing duty cycled, electrical energy-consuming equipment, including gas-, oil-, and propane-fired heating equipment controlled via electrically powered control systems. The present invention also relates to heating, ventilating, air conditioning, and refrigeration equipment systems incorporating the electronic controller and methods of using the controller in such systems.

Heating, ventilating, air conditioning and/or refrigeration ("HVACR" or "HVAC&R") control systems have been designed to perform two major functions: temperature regulation and dehumidification. Increased focus on carbon footprint and green technologies has led to numerous energy related improvements including more efficient refrigerants, variable speed compressors and fans, cycle modifications, and more efficient burners. Although these improvements can be found on most new HVAC&R equipment, there is a large installed base of older existing equipment still in operation but often unable to take advantage of these energy related improvements as retrofit improvements.

Common retrofit technologies that address energy usage include methodologies such as setpoint curtailment, temperature anticipation, equipment staging, variable speed fans, burners, and compressors, and closed loop load sensing instead of timer based. It is often difficult to retrofit existing installations with these methodologies because the methodologies are highly dependent on the HVAC&R equipment, configuration, and installation details. Adding a conventional energy saving methodology to an existing HVAC&R system can be costly and time consuming.

U.S. Patent Nos. 5,687,139 and 5,426,620 relate in part to a specially controlled switch in a control signal line of individual units of electrical equipment, such as a control signal line on a standard air conditioning unit, which combines a digital recycle counter with a control line of an electrical load. The digital recycle counter of the control device is used with pre-settings for providing the demand control on a wide range of electrically powered equipment.

The present inventors have recognized that it would be desirable to provide retrofittable demand control and management technology for HVAC&R systems controlled using optimized duty cycling which is more adaptive to a given on-site load unit or units to be controlled and less reliant on OEM specifications, presettings, and/or installer judgment.

SUMMARY OF THE PRESENT INVENTION

A feature of the present invention is to provide an electronic controller device for a heating, ventilating, air conditioning and/or refrigeration (HVAC&R) system that is controlled using optimized duty cycling, which can automate the configuration and control of optimal "on" and "off' cycle time durations for a load device or devices in the HVAC&R system.

Another feature of the present invention is to retrofit a HVAC&R system that is controlled using optimized duty cycling with an electronic controller device, which can automatically configure and control execution of optimal "on" and "off' cycle time durations for a load device or devices in the HVAC&R system.

An additional feature of the present invention is to provide a method of using an electronic controller device for a heating, ventilating, air conditioning and/or refrigeration (HVAC&R) system that is controlled using optimized duty cycling, which can automatically calculate and control execution of optimal "on" and "off' cycle time durations for a load device or devices in the HVAC&R system.

The objectives and other advantages of the present invention will be realized and attained by means of the elements and combinations particularly pointed out in the description and appended claims.

To achieve these and other advantages, and in accordance with the purposes of the present invention, as embodied and broadly described herein, the present invention relates to an electronic controller device for automatic control of a heating, ventilating, air conditioning or refrigeration (HVAC&R) system, comprising a digital recycle counter that is capable of intercepting a thermostat command for cooling, refrigeration, or heating and replacing the thermostat command with a modulated binary signal that operates in either an "on" state or "off' state, and a computer-readable storage medium that comprises a program that includes an auto-configuration mode that is capable of determining a base line performance of the HVAC&R system through a commissioning phase and is capable of determining an adjusted performance based on energy consumption, temperature regulation, humidity regulation, or power limit or any combination thereof, and wherein the program is capable of adjusting the digital recycle counter "on" and "off' states based on the adjusted performance determination.

The present invention also relates to a heating, ventilating, air conditioning or refrigeration (HVAC&R) system comprising the indicated electronic controller device, a thermostat, and at least one HVAC&R load unit, operably connected to a power supply line. The electronic controller comprises the indicated digital recycle counter that is capable of intercepting a thermostat command for the at least load unit and replacing the thermostat command with a modulated binary signal that operates in an "on" state or "off' state, and the indicated computer-readable storage medium that comprises a program that includes an auto-configuration mode that is capable of determining a base line performance of the HVAC&R system through a commissioning phase and is capable of determining an adjusted performance based on energy consumption, temperature regulation, humidity regulation, or power limit or any combination thereof, and the program also is capable of adjusting the digital recycle counter "on" and "off' states based on the adjusted performance determination. The system can further include at least one remote temperature and/or humidity sensor operable for sensing a temperature and/or humidity condition in a zone to be temperature or humidity conditioned and the electronic controller device can be operable to obtain a signal therefrom. In an alternative, no remote sensor need be used at all, wherein a temperature signal can be estimated from the OEM control signal timing and existing ASHRAE (American Society of Heating, Refrigerating and Air-Conditioning Engineers) data for setpoint and hysteresis temperature values.

The present invention also relates to a HVAC&R system which comprises the electronic controller device having the indicated program and digital recycle counter optionally in combination with at least one remote temperature and/or humidity sensor located in a zone to be conditioned, wherein the remote sensor can transmit data signals to the controller on the temperature and/or humidity condition of the zone and the controller can automatically calculate and control execution of optimal "on" and "off" cycle time durations for a load device or devices in the HVAC&R system used for condition control in the zone, wherein the controller device can substitute a thermostat control signal of the HVAC&R system with a modulated binary control signal from the controller. The remote temperature and/or humidity sensor can be at least one separate sensor from a thermostat sensor existing in the HVAC&R system. Alternatively, a temperature sensing capability of a sensor at the existing thermostat can be used as a remote temperature sensor for the controller.

The present invention also relates to a method for automatically controlling and managing load demand and operation of a HVAC&R load unit powered by electricity, comprising steps of electrically connecting a controller in a control signal line between a thermostat for a load device and an equipment load control switch for the load device, wherein the controller comprises a computer-readable storage medium and a digital recycle counter. A commissioning phase then is conducted with the controller comprising, while operating the load device for a plurality of cycles of operation, executing a commissioning program obtained from the computer-readable storage medium that includes an auto-configuration mode, wherein the commissioning program determines a base line performance of the HVAC&R load unit through a commissioning phase of operation of the load device, and determines an adjusted performance based on energy consumption, temperature regulation, humidity regulation, or power limit or any combination thereof for the load device. A thermostat command for cooling, refrigeration, or heating at the controller then can be intercepted and the digital recycle counter can replace the thermostat command with a modulated binary signal that operates in an "on" state or "off' state for adjusting the "on" and "off' states of the digital recycle counter with a digital recycle counter program based on the adjusted performance determination.

It is to be understood that both the foregoing general description and the following detailed description are exemplary and explanatory only and are intended to provide a further explanation of the present invention, as claimed.

The accompanying drawings, which are incorporated in and constitute a part of this application, illustrate some of the embodiments of the present invention and together with the description, serve to explain the principles of the present invention.

BRIEF DESCRIPTION OF DRAWINGS

FIG. 1 is a block/schematic diagram of a HVAC&R system including an electronic controller and a remote sensor apart from a thermostat sensor according to an example of the present invention.

FIG. 2 is a block/schematic diagram of a HVAC&R system including an electronic controller without a remote sensor apart from the thermostat according to an example of the present invention.

FIG. 3 is a block diagram of a portion of a HVAC&R system including an electronic controller and optional remote temperature sensor according to the present invention.

FIG. 4 is a block diagram of a microcontroller of an electronic controller of FIG. 3 according to an example of the present invention.

FIG. 5 is perspective view of a portion of a HVAC&R system of FIG. 3 including an electronic controller and optional remote temperature sensor according to an example of the present invention.

FIG. 6 is a block diagram of a portion of a HVAC&R system including an electronic controller, optional remote temperature sensor, and expansion I/O board(s) according to an example of the present invention.

FIG. 7 is perspective view of a portion of a HVAC&R system of FIG. 6 including an electronic controller, optional remote temperature sensor, and expansion I/O board(s) according to an example of the present invention.

FIG. 8 is a block diagram of a portion of a HVAC&R system including an electronic controller, optional remote temperature sensor, expansion I/O board(s), and web-enabled data concentrator(s) according to an example of the present invention.

FIG. 9 is perspective view of a portion of a HVAC&R system of FIG. 8 including an electronic controller, optional remote temperature sensor, and expansion I/O board(s) according to an example of the present invention.

FIG. 10 is a perspective view of a portion of a HVAC&R system of FIG. 8 including a data concentrator including a router and aircard modem according to an example of the present invention.

FIG. 11 is a block diagram of a portion of a HVAC&R system including an electronic controller, remote user input device, and web-enabled data concentrator with router and USB aircard, according to an example of the present invention.

FIG. 12 is a flow chart of a process for automatically programming an electronic controller to control digital recycle counter operation in a HVAC&R system according to an example of the present invention.

FIG. 13 is a block diagram showing a remote user input device having a user interface and an electronic controller of the HVAC&R system according to an example of the present invention.

FIG. 14 is a pictorial view showing one example of a touch screen interface of the user input device of FIG. 13 for selecting a configuration mode selected from energy control, demand response control, and power limiting control in a DRC control profile response controlled by the electronic controller, according to an example of the present invention.

FIG. 15 is a plot showing OEM controller behavior for a load device of a HVAC&R system over a period of time with conditioned space (zone) temperature and OEM controller command signals shown as recorded over a period of time with an electronic controller according to an example of the present invention.

FIG. 16 is a plot showing temperature behavior of conditioned space while operating an algorithm in a minimum energy mode for a cooling application using exemplary settings of weight parameters of a performance index disclosed herein, which plot shows the DRC control signal and associated conditioned space temperature recorded with an electronic controller according to an example of the present invention.

FIG. 17 is a plot showing temperature behavior of conditioned space while operating an algorithm in a minimum energy mode for a cooling application using exemplary different settings of weight parameters of the integrated quadratic performance index, which plot shows the DRC control signal and associated conditioned space temperature with an electronic controller according to an example of the present invention.

FIG. 18 is a plot showing OEM controller behavior for a load device of a HVAC&R system over a period of time with zone temperature and OEM controller command signals and temperature behavior of the conditioned space shown as recorded over a period of time with an electronic controller according to an example of the present invention.

FIG. 19 is a plot showing temperature behavior of conditioned space while operating an algorithm in a power limit mode for a cooling application, which plot shows the DRC control signal and associated conditioned space temperature using an electronic controller according to an example of the present invention.

## DETAILED DESCRIPTION OF THE PRESENT INVENTION

The present invention relates in part to a retrofittable controller add-on device including integrated auto-configuration and digital recycle counter programs that can automatically and optimally calculate and control execution of cycle time durations for heating equipment, cooling equipment, and/or refrigeration equipment that are controlled using duty cycling.

The present invention includes the following aspects/embodiments/features in any order and/or in any combination:

1. The present invention relates to an electronic controller device for automatic control of a heating, ventilating, air conditioning or refrigeration (HVAC&R) system. The device comprising:

a digital recycle counter that is capable of intercepting a thermostat command for cooling, refrigeration, or heating and replacing said thermostat command with a modulated binary signal that operates in an "on" state or "off" state, and

a computer-readable storage medium that comprises a program that includes an auto-configuration mode that is capable of determining a base line performance of said HVAC&R system through a commissioning phase and is capable of determining an adjusted performance based on energy consumption, temperature regulation, humidity regulation, or power limit or any combination thereof, and wherein said program is capable of adjusting said digital recycle counter "on" and "off" states based on said adjusted performance determination.

2. The electronic controller device of any preceding or following embodiment/feature/aspect, wherein said electronic controller device further comprises an override mode that is capable of further adjusting said digital recycle counter

EP 2 502 121 B1

for a period of time.

3. The electronic controller device of any preceding or following embodiment/feature/aspect, wherein said electronic controller device is operable wherein said override mode responds to temporary factors affecting temperature or humidity or both.

4. The electronic controller device of any preceding or following embodiment/feature/aspect, wherein said "on" state has a constant value and duration signal for each "on" state and said "off' state has a constant value and duration signal for each "off' state for said adjusted performance. During the first iteration of the algorithm following a commissioning, the durations of the "on" and/or "off' signals can differ from subsequent durations to satisfy the initialization aspects of the algorithm.

5. The electronic controller device of any preceding or following embodiment/feature/aspect, wherein said electronic controller device is operable wherein said determining of said adjusted performance occurs two or more times.

6. The electronic controller device of any preceding or following embodiment/feature/aspect, wherein said electronic controller device is operable wherein said commissioning phase is repeated one or more times using current performance of the HVAC&R system as the base line performance.

7. The electronic controller device of any preceding or following embodiment/feature/aspect, wherein said electronic controller device is operable wherein said auto-configuration mode processes data from the base line performance or configuration data to provide estimates on a maximum conditioned space temperature, a minimum conditioned space temperature, a conditioned space temperature hysteresis deadband, a controller cycle time, and a space temperature set point and creating a dynamic mathematical model based on said data, and determining an adjusted dynamic mathematical model from inputted performance requirements based on energy consumption, temperature regulation, humidity regulation, or power limit or any combination thereof, and adjusting said digital recycle counter based on said adjusted dynamic mathematical model.

8. The electronic controller device of any preceding or following embodiment/feature/aspect, wherein said program of said electronic controller device is further operable to process sensor signals related to compressor pressure, fluid rate, or both, sensed at and received from a HVAC&R heating or refrigeration load unit.

9. A heating, ventilating, air conditioning or refrigeration (HVAC&R) system comprising a heating, ventilating, air conditioning or refrigeration unit and said electronic controller device of any preceding or following embodiment/feature/aspect that substitutes a thermostat control signal of said HVAC&R system with said modulated binary control signal from said electronic controller device.

10. A system for automatic control of a heating, ventilating, air conditioning or refrigeration (HVAC&R) system, comprising:

a thermostat, an electronic controller device, an optional remote temperature sensor, at least one HVAC&R load unit, operably connected to a power supply line, wherein
the optional remote temperature sensor being operable for sensing a temperature in a zone to be temperature or humidity conditioned and transmitting a signal thereon to the electronic controller via the power supply line; and the electronic controller comprising (a) a digital recycle counter that is capable of intercepting a thermostat command for the at least load unit and replacing said thermostat command with a modulated binary signal that operates in an "on" state or "off' state, and (b) a computer-readable storage medium that comprises a program that includes an auto-configuration mode that is capable of determining a base line performance of said HVAC&R system through a commissioning phase and is capable of determining an adjusted performance based on energy consumption, temperature regulation, humidity regulation, or power limit or any combination thereof, and wherein said program is capable of adjusting said digital recycle counter "on" and "off' states based on said adjusted performance determination.

11. The system of any preceding or following embodiment/feature/aspect, wherein the electronic controller further comprises a wireless transceiver operable for communicating with a wireless ethernet network, and an expansion I/O interface for communicating with at least one I/O expansion module, wherein the system being operable for multiple load unit control.

12. The system of any preceding or following embodiment/feature/aspect, wherein the electronic controller further comprises a wireless transceiver operable for communicating with a wireless ethernet network and a wireless RF transceiver operable for communicating with a wireless RF network, and an expansion I/O interface for communicating with at least one I/O expansion module, and further including at least one data concentrator operable to communicate with the electronic controller and said data concentrator including a router and aircard or building LAN for linking with the Internet and a cloud server, wherein the system being operable for multiple load unit control and energy consumption management and record keeping.

13. A method for automatically controlling and managing load demand and operation of a HVAC&R load unit powered by electricity, comprising the steps of:

electrically connecting a controller in a control signal line between a thermostat for a load device and an equipment load control switch for the load device, wherein the controller comprising a computer-readable storage medium and a digital recycle counter;

conducting a commissioning phase with the controller comprising, while operating the load device for a plurality of cycles of operation, executing a commissioning program obtained from the computer-readable storage medium that includes an auto-configuration mode, wherein the commissioning program determines a base line performance of the HVAC&R load unit through a commissioning phase of operation of the load device, and determines an adjusted performance based on energy consumption, temperature regulation, humidity regulation, or power limit or any combination thereof for the load device; and

intercepting at least one thermostat command for cooling, refrigeration, or heating at the controller and said digital recycle counter replacing said thermostat command with a modulated binary signal that operates in an "on" state or "off' state for adjusting the "on" and "off' states of said digital recycle counter with a digital recycle counter program based on said adjusted performance determination.

14. The method of any preceding or following embodiment/feature/aspect, comprising applying the program to a single or multi capacity compressor of an air conditioning system wherein the compressor is operable to receive a cooling command from a thermostat or BMS to produce supply air used to cool a conditioned space, wherein the applied program minimizes electrical energy usage while maintaining conditioned space temperature near the OEM controller setpoint.

15. The method of any preceding or following embodiment/feature/aspect, wherein said HVAC&R load unit is a burner or boiler system powered by any fossil or electric fuel.

16. The method of any preceding or following embodiment/feature/aspect, wherein said HVAC&R load unit is a freezer system that optionally includes single or multiple compressors.

17. The method of any preceding or following embodiment/feature/aspect, applied in a demand response temperature control mode of applying the program to a single or multi capacity compressor of an air conditioning system subject to an externally supplied temperature setpoint communicated to the electronic controller via either wired or wireless networking.

18. The method of any preceding or following embodiment/feature/aspect, applied in a power limiting mode of applying the program to a single or multi capacity compressor of an air conditioning system to regulate the power drawn by the equipment during a specified time interval to be less than or equal to a power limit setpoint, wherein the setpoint being an internal parameter setting or communicated to the controller through a wired or wireless communication port thereof.

19. The method of any preceding or following embodiment/feature/aspect, wherein the commissioning mode being continually re-executed, automatically or manually, to capture temperature effects of changing loads in a mathematical model of the program used for the optimization.

20. The method of any preceding or following embodiment/feature/aspect, wherein the commissioning mode being periodically re-executed, automatically or manually, to capture temperature effects of changing loads in a mathematical model of the program used for the optimization.

The present invention can include any combination of these various features or embodiments above and/or below as set forth in sentences and/or paragraphs.

With regard to the electronic controller device, the adjusted performance that is determined and achieved for operation of the HVAC&R system can include factors based on energy consumption, temperature regulation, humidity regulation, and/or power limit. Any combination of these features is possible. In considering these features, the importance of each feature or the weight assigned to each feature for purposes of determining the adjusted performance can be inputted. For instance, emphasis can be solely or primarily placed on energy consumption, on temperature regulation, on humidity regulation, or on power limits, or any combination of these factors. In one of the exemplary formulas set forth below, the variable Q represents run time of the DRC control, which would be one example of an energy consumption factor. By assigning emphasis on this variable Q, the run time of the digital recycle counter, which ultimately permits operation of the HVAC&R system, minimizes accumulated run time in order to save on energy consumption. When emphasis of this factor is made (or weight assigned to this factor), especially when no other factor is emphasized, energy consumption is reduced and, further, as a result, the humidity and/or temperature of the environment may not reach the set point of a thermostat command. As another example, another weight variable can be R, as shown below, which represents maintaining a set point temperature, for instance, of the thermostat. When emphasis is made on this weight variable, the adjusted performance places emphasis on achieving the set point temperature of the thermostat or temperature sensor even if this means higher energy consumption. If Q and R are assigned equal or near equal weight, the power limiting mode is operational where essentially a "middle of the road" approach is achieved, in which the average energy consumption during a defined time interval is reduced and the temperature achieved during the operation of the digital recycle counter comes closer to achieving set point temperature of the thermostat (and/or temperature sensor and/or other environmental sensor) and, certainly, achieving a closer set point temperature than if emphasis of Q alone was weighted. Another variable S, as described below, places importance on controlled temperature variation. When emphasis is made on the S value, this leads to less temperature fluctuation around the temperature set point, and therefore there is less variance on the actual temperature of the environment that is being heated or cooled. Needless to say, the present invention permits selective control of the adjusted performance based on the factors that are important to the user or a combination of these factors to achieve a balance with respect to these factors. The weight assigned to the Q, R, and S factors can be any positive or zero valued number such as:

Q = 0 - 1000 (e.g, 0, 0.01, 0.1, 0.5, 0.8, 1, 1.5, 2, 2.5, 3, 4, 5, 10, 50, 75, 100, 150, 200, 250, 500, 750, 900, 1000, and any integers or fractions in the range or within these values provided) R = 0 - 1000 (e.g, 0, 0.01, 0.1, 0.5, 0.8, 1, 1.5, 2, 2.5, 3, 4, 5, 10, 50, 75, 100, 150, 200, 250, 500, 750, 900, 1000, and any integers or fractions in the range or within these values provided) S = 0 - 1000 (e.g, 0, 0.01, 0.1, 0.5, 0.8, 1, 1.5, 2, 2.5, 3, 4, 5, 10, 50, 75, 100, 150, 200, 250, 500, 750, 900, 1000, and any integers or fractions in the range or within these values provided).

Any combination of any Q, R, and S values is possible. For instance, Q can be any value that is the same or greater than R and/or S (such as at least 10% greater, at least 20% greater, at least 30%, at least 50% greater, at least 75% greater, at least 100% greater, at least 200%, at least 300% greater, at least 500% greater and the like). R can be any value that is the same or greater than Q and/or S (such as at least 10% greater, at least 20% greater, at least 30%, at least 50% greater, at least 75% greater, at least 100% greater, at least 200%, at least 300% greater, at least 500% greater and the like). S can be any value that is the same or greater than Q and/or R (such as at least 10% greater, at least 20% greater, at least 30%, at least 50% greater, at least 75% greater, at least 100% greater, at least 200%, at least 300% greater, at least 500% greater and the like).

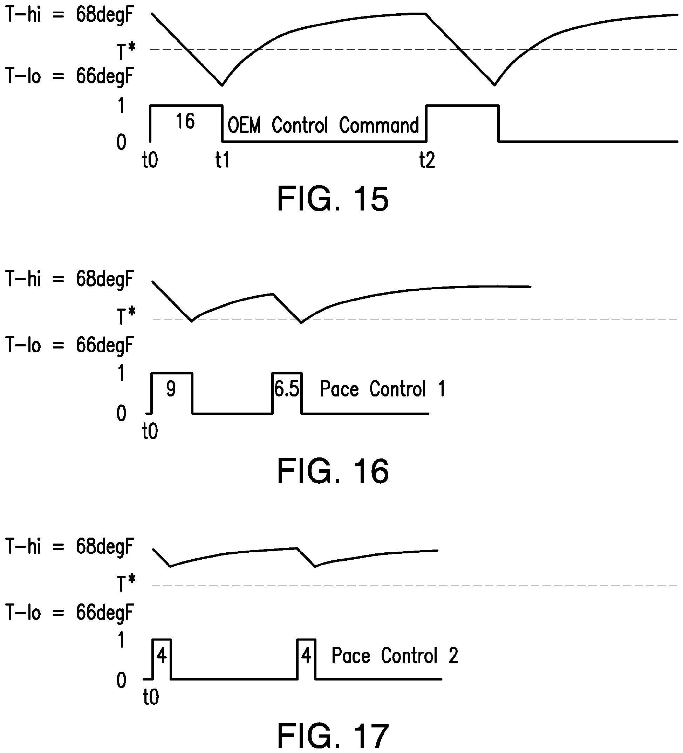

As an option, in any of the embodiments and/or systems of the present invention, the commissioning phase can be repeated one or more times to essentially be a re-commissioning phase. This re-commissioning phase can occur in any time increments and/or any number of times. The re-commissioning phase can be on regular and/or pre-programmed intervals or can be irregularly done. For instance, the re-commissioning phase can occur every 30 minutes, every hour, every 2 hours, every 3 hours, every 5 hours, every 7 hours, every 10 hours, every 12 hours, every 18 hours, every day, every week, or any other unit of time. By conducting a re-commissioning phase(s), this permits the electronic controller device to better understand the environment and changes that occur in the environment during an hourly basis or a daily basis or a weekly basis, seasonal basis, and the like. For instance, by conducting a re-commissioning phase, the electronic controller device can better understand the various needs during a workday, when workers are present, as well as when workers are not present. Further, by having a re-commissioning phase, especially one that is consistently done, the electronic controller device can better achieve the desired adjusted performance since a re-commissioning phase takes into account the outside environmental changes (e.g., daily) due to weather (e.g., sunny day, cloudy day, cool day, hot day, rainy day, and the like) and can further take into account other variables, such as human variables and the like. As an option, during a commissioning phase or re-commissioning phase, the thermostat command runs per OEM settings or other altered settings without interference from the digital recycle counter so that the auto configuration mode of the present invention can determine a new base-line performance and, through a commissioning or re-commissioning phase, determine an adjusted or new adjusted performance based on the desired variables (e.g., Q, R, S) inputted for weight values. Further, through a commissioning or re-commissioning phase, it is possible that the initial "on" state may have a different amount of "on" time than a subsequent "on" time. For instance, as shown in FIG. 16, one will note that the initial "on" state began when the zone temperature exceeded the high temperature hysteresis bandwidth value and lasted for 9 time units, and then 6.5 time units, and the 6.5 time units would have continued until the next re-commissioning phase. The initial "on" state of 9 time units is a result of permitting the thermostat to achieve set point temperature from the high temperature hysteresis bandwidth value. Thus, as an option in the present invention, the "on" state or pulse may vary initially or at any other time, and/or it is also possible that the initial "off' state or pulse can vary. As an option, the initial "on" and/or initial "off" state or pulse can vary, and then subsequently a fixed or steady "on"/ "off' pattern is obtained until a re-commissioning phase is conducted, which is optional.

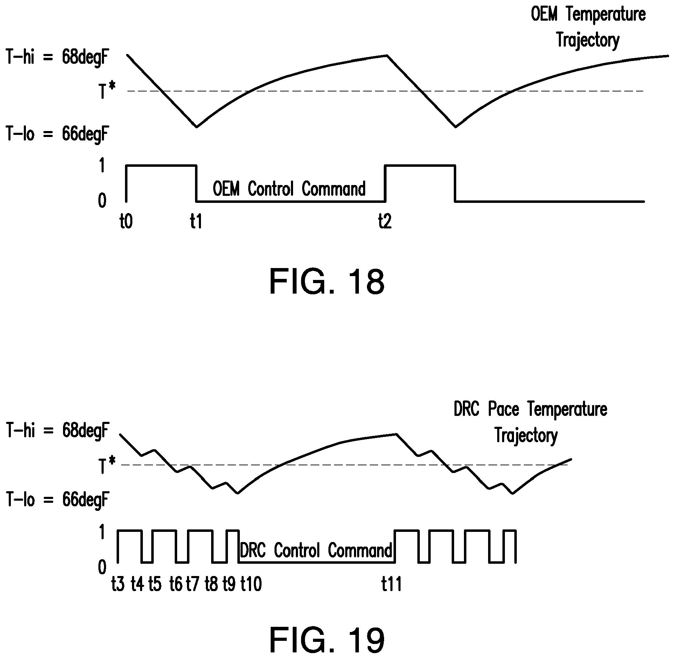

In FIG. 19, the "on" state, at T9 to T10, is truncated because, at this point, the thermostat command sent a signal to turn off the HVAC&R system. Thus, in the present invention, it is possible to have a varied "on" state and/or a varied "off' state (with respect to the length of time) when the electronic controller device is running the program based on the adjusted performance in view of this factor. During a commissioning or re-commissioning phase, the program in the computer-readable storage medium of the electronic controller device of the present invention can run one or more calculations or determinations in order to determine the minimum number of "on"/"off" periods to achieve the set point temperature or other variable chosen. Also, with the present invention, the number of "on"/"off" cycling during each OEM "on" command can be constrained in order to control or prevent over-cycling of the overall HVAC&R system. When a constraint value is set forth as part of the program, this limitation is taken into consideration in determining the operation of the DRC. For instance, as can be seen in FIG. 19, in determining the number of "on"/"off" cycles of the DRC, the program takes into account, ahead of time, the number of cycles of "on" and "off' for the DRC that can occur while in the process of achieving the set point temperature or other chosen variable. Also, in FIG. 19, essentially, the variables Q and S are neglected and the only value weighted was R, which was the variable for maintaining the set point temperature at the OEM set value. Essentially, FIG. 19 is a very close simulation of an OEM thermostat, except for the number of cyclings that are occurring due to the "on" and "off" cycling of the DRC, which does achieve some energy cost savings. Further, even in FIG. 19, where the only value weighted was R, this value can be limited to a certain percent of run time of the OEM run time to ensure that energy cost savings are achieved and to achieve other benefits with regard to the wear and tear of the HVAC&R system. This limited run time, which is a percent of the OEM run time, can be any amount, such as from 1% to 100%, such as 10% to 90%, 20% to 80%, 30% to 70%, 40% to 80%, 50% to 80%, 60% to 80%, and the like. Any percent of the OEM run time can be inputted into the system to further constrain the run time of the DRC in order to achieve a percent run time constraint, however, as the limited run time values increase, the resulting set point temperature achieved can be compromised.

A controller is provided having an auto-configuration program that can be used to fully automate the calculation of optimal "on" and "off" cycle time durations for a digital recycle counter (DRC) program used for control in the normal run phase of the load unit, using optional sensor information specific to the HVAC&R installation. The methodology used to calculate the optimal cycle time durations using the auto-configuration program on the controller can be based on a three-step procedure involving adapted standard mathematical operations, which can comprise data collection and filtering, modeling, and/or optimization. Initially, baseline performance data can be collected during normal OEM controller operation. This data then can be reduced, using, for instance, least squares techniques, to create a mathematical model relating the input OEM controller command signal to the conditioned space temperature (and/or other environmental factor(s)) and the equipment power consumption as outputs. A search program (e.g., gradient based program) forming part of the auto-configuration program then can be employed to iteratively minimize a performance index (e.g., a time integrated quadratic performance index) by adjusting the "on" and "off" cycle time duration values of the DRC command profile. The performance index (e.g., quadratic performance index) can penalize one, two, or three aspects of equipment behavior, which are energy consumption, temperature regulation, and power consumption. By altering the ratio of the penalty values between the three aspects, the program becomes capable of three distinct modes of automatic operation in normal run phase that is managed by the digital recycle counter program, which are minimum energy control, demand response control, and power limiting control. During each iteration to minimize the performance index, the cycle time duration values can be processed by a mathematical model included in the auto-configuration program to produce the temperature (and/or other environmental factor(s)) and power values needed to evaluate the quadratic terms in the performance index for the next iteration. A search program included in the auto-configuration program can be constrained to establish an optimal solution for the cycle durations in a range of cycle time durations that protect against machine short cycling, overcycling of the DRC control algorithm, and other machine, health, and/or human comfort issues.

The electronic controller further can be operable, for example, wherein the commissioning phase is repeated one or more times using the most current performance of the HVAC&R system as the base line performance. The auto-configuration mode can process data from the base line performance or configuration data, whether initial or current, to provide estimates on a maximum conditioned space temperature, a minimum conditioned space temperature, a conditioned space temperature hysteresis deadband, a controller cycle time, and a space temperature set point and creating a dynamic mathematical model based on the data, and determining an adjusted dynamic mathematical model from inputted performance requirements based on energy consumption, temperature regulation, humidity regulation, or power limit or any combination thereof, and adjusting the digital recycle counter based on the adjusted dynamic mathematical model.

The digital recycle counter program that also can be embodied in the electronic controller with the auto-configuration program substitutes a thermostat's control signal with a modulated binary control signal. When the thermostat (OEM controller) issues a command for cooling or heating, the digital recycle counter program can intercept the command and replace it with a modulated binary signal that operates in either of two states, "on" or "off". This modulated signal replaces the thermostat command signal to the equipment whenever there is a cooling or heating demand. When the thermostat command is not calling for heating or cooling, the DRC binary signal reverts to the "off" state. The primary benefits of the DRC control can be less power consumption per unit time (power limiting) which translates to lower energy demand charges and, in some cases, shorter equipment run times which translate to lower energy consumption. With proper adjustment of the DRC "on" and "off" cycle time durations, the run-on behavior of HVAC&R systems is truncated and more effective use is made of stored heat or cool energy. The durations of the "on" and "off" cycle times used in the digital recycle counter program are optimized by the auto-configuration program. If an installer were to select these values for the controller as presettings, such as using physical switch settings, during the installation process based on the type of HVAC&R equipment being used and the anticipated loads, these cycle time duration values may or may not reflect optimum values, such as depending on the experience level of the installer and idiosyncrasies of the particular load unit to be controlled. That is, a given load unit may not perform exactly as predicted by OEM specifications, nor may performance of the load unit remain constant or stable over the product life, and/or other factors may temporarily or permanently affect the load unit performance which are not accounted for by original pre-settings. The auto-configuration and digital recycle counter programs used on present controllers can automatically and interactively provide customized and/or optimized duty cycle control for a given load unit. This can reduce the energy cost and/or the runtime to operate the HVAC&R equipment.

A controller device having these auto-configuration and digital recycle counter programs residing and executable thereon can be used in stand-alone device or networked (e.g., LAN, WAN, web-enabled, etc.) configurations. The auto-configuration and digital recycle counter programs can be applied, for example, to any heating system including gas, electric, or oil, or any vapor compression based air conditioning or refrigeration system (HVAC&R systems) that is controlled using, for instance, optimized duty cycling. The auto-configuration and digital recycle counter programs can be embodied in an electronic controller installed in the signal control line connecting a thermostat (also referred to as an "Original Equipment Manufacturer Controller" or "OEM controller") with the HVAC&R equipment being controlled. When implemented on a microprocessor carried by the controller, the software program code segments configure the microprocessor to create specific logic circuits. The autoconfiguration and recycle counter programs individually or jointly can reference at least two fundamental feedback signals, which are the OEM control signal and the conditioned space temperature (or an estimate thereof). In heating and refrigeration applications, additional temperature, pressure, or fluid flow rate signal sensors can be optionally added for enhanced accuracy. The minimum energy control mode that can be selected and established using the auto-configuration program, and implemented with the digital recycle counter program in normal run phase, can be applicable to equipment that is duty-cycle controlled in a two state (binary) manner, either full on or full off. The minimum energy mode can be applied to staged equipment, but basic binary control preferably exists at each staging level. The minimum energy mode generally is not applicable to equipment that uses variable speed control. The demand management function is applicable to all HVAC&R equipment, regardless of their OEM control method. The power limiting function is applicable to all electrically powered HVAC&R equipment in which the cost of electricity is partially based on a demand charge. The indicated auto-configuration and digital recycle counter programs can be embodied, for example, in an easy-to-install electronic add-on networkable control device designed, for example, to (1) minimize the energy consumption of existing heating, cooling, and refrigeration equipment, (2) provide demand response control of the existing equipment when a temperature curtailment command is issued, and/or (3) automatically limit the power consumption of the existing equipment to pre-specified levels to reduce utility demand charges.

The electronic controller can be used according to different options as integrated with or without integration of a remote temperature and/or humidity sensors in the HVAC&R system. In one option, the electronic controller can be integrated with at least one remote temperature and/or humidity sensor that is different from any sensing component(s) provided on the existing thermostat (e.g., OEM thermostat). X10 sensing technologies, for example, can be adapted for use in such HVAC&R systems. In another option, the remote sensor can utilize the temperature sensing capability of the existing thermostat. In yet another option, no remote sensor need be used at all, wherein the temperature signal can be estimated from OEM control signal timing and existing ASHRAE data for setpoint and hysteresis temperature values.

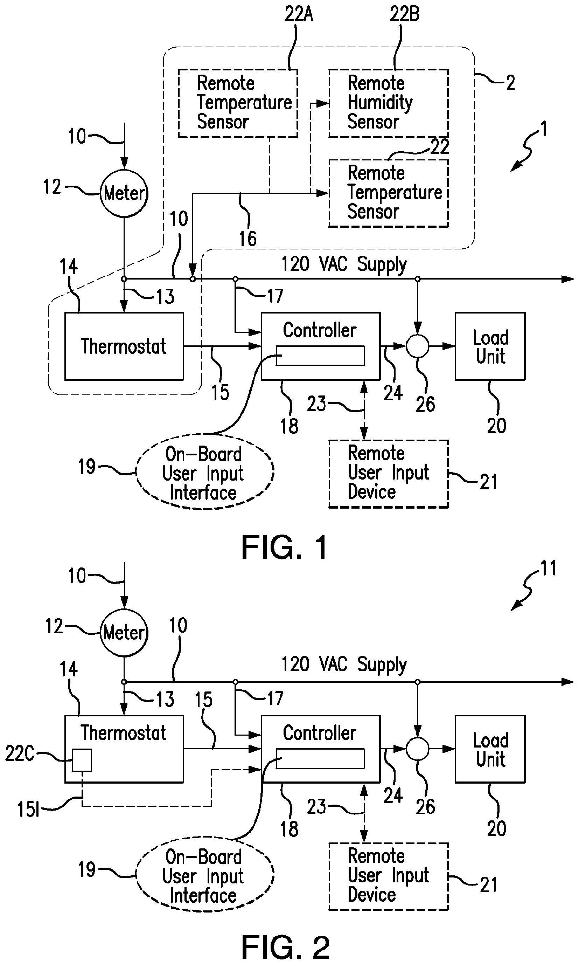

FIG. 1 shows a HVAC&R system 1 including an electronic controller 18 on which the indicated auto-configuration and digital recycle counter programs can reside and from which the programs can be executed. The controller 18 and optional remote temperature sensor 22 can be retrofit in the system 1 to provide control of at least one HVAC&R load unit 20 that provides condition control in a zone 2. Power line 10 passes through utility meter 12 at the structure where at least one load unit 20 to be controlled is located. Meter 12 measures usage and demand of electrical energy at that location. Load unit 20 can be, for example, an air conditioner, heat pump, furnace, refrigeration system, or other load unit of a HVAC&R system. Operative main power line 10 generally is unconditioned, and supplies operative power to load unit 20 via load control switch 26, and typically other load units and appliances in the same structure (not shown). The power supply line 10 can be, for example, a 120 volt (VAC) line powering the HVAC&R system 1 to be retrofit with the controller 18. The system 1 to be retrofit has at least one standard thermostat 14 connected to the HVAC&R load unit 20. Thermostat 14 can be connected via line 13 to power line 10. In one typical situation, control signal line 15 of thermostat 14 would transmit an AC voltage of 24 volts during the periods when a thermostatic control is, for example, calling for cooling from an air conditioning unit (load unit). The control signal would normally activate load control switch 26 in main power line 10 to power the load unit 20. That is, in the absence of controller 18, control signal line 15 would be in control of opening or closing load unit control switch 26, and thereby opening or closing the circuit of operative power line 10 and controlling the flow of operative power to load unit 20. The controller 18 is interposed and installed in the thermostat control signal line 15 at some point between thermostat 14 and the load unit control switch 26. As shown, thermostat line 15 can be cut and connected at one cut end to controller 18. As also shown, the remaining portion of the cut signal control line, referenced as line 24, can be connected at one end to controller 18 and at the other end to load control switch 26. The controller 18 can be physically mounted, for example, in sheet metal (not shown) near the load unit 20, such as a standard sheet metal construction enclosure used with the load unit. Preferably, this tapping of controller 18 into the control signal line 15 (24) is made as close as practically feasible to the load control switch 26. Usually it can be possible to make the connection within the physical confines of the load unit itself. The connection of controller 18 in the control signal line could be made, for example, within the casing containing the compressor unit of a residential air conditioning unit. For example, the controller 18 could be mounted in a sheet metal enclosure that houses a compressor of an air conditioning unit as installed on a slab or platform near ground level immediately adjoining a home or building supported by the unit, or on a rooftop thereof. Controller 18 also can be powered through a direct electrical connection 17 made with power lines 10 (e.g., via a power cord, power extension cord, direct pronged plug, etc.). Controller 18 can include on-board user interface controls 19 and/or can receive control inputs from a remote input device 21, which can be further understood by other descriptions herein that will follow.

Optional remote temperature sensor 22 can be located in a zone 2 of the building to be conditioned using load unit 20. The zone 2 to be temperature and/or humidity conditioned can be, for example, a room, open building space, a refrigeration room, and so forth. Although illustrated herein as using a single remote temperature sensor 22 apart from the existing thermostat, a plurality of remote temperature sensors (22A, etc.) can be used. If multiple remote sensors are used, the multiple sensed values can be averaged, or a median value used, or otherwise statistically processed for use at the controller 18. Also, although remote sensor unit 22 is illustrated herein as a temperature sensor, it will be understood that the remote sensor unit alternatively or additionally can be a remote humidity sensor 22B used alone or in combination with the remote temperature sensor 22. The optional remote sensor 22, and if used, remote sensor 22A and/or remote sensor 22B, is (are) installed in a zone where a thermostat 14 also is located for OEM control of the load unit 20. Remote temperature sensor 22 can be a sensing module that can be plugged via integral multiple prongs into a standard wall outlet accessing the power line 10 in a zone 2 for which temperature and/or humidity control by controller 18 is desired. The remote temperature sensor 22 also can be hardwired at a wall outlet, or connected as a module via a power cord or power extension cord. Remote temperature sensor 22 further can be a device that adapts so-called "X10" technology for transmitting a signal reflecting a real-time temperature sensed in zone 2 by the temperature sensor unit through the power lines 10 by which it can be acquired and processed by controller 18. "X10" is an international and open industry standard for communication among electronic devices used for home automation, also known as domotics. It primarily uses power line wiring for signaling and control, where the signals involve brief radio frequency bursts representing digital information. Household electrical wiring (i.e., the same which powers lights and appliances) can be used to transmit digital data from the X10 device to one or more other devices that access the same power lines 10 and which can process the signals. In the present invention, the XI0 signal-receiving and processing device is the controller 18. This digital data can be encoded, for example, onto a 120-125 kHz carrier, which can be transmitted as bursts during the relatively quiet zero crossings of the 50 or 60 Hz AC alternating current waveform. One bit can be transmitted at each zero crossing. By adapting XI0 technology, the remote sensor 22 can transmit digital data on the sensed temperature through the power lines 10 to the controller 18. A remote humidity sensor, if used, can be a device that similarly adapts "XI0" technology for use in transmitting signals reflecting absolute humidity sensed in the zone to be controlled through the power lines 10 by which it can be acquired and processed by controller 18. The remote sensor can also utilize the temperature sensing capability of the existing thermostat.

For simplification purposes, a single load unit 20 under the load control and management of controller 18 in a single control signal line is described with respect to FIG. 1. Although only one load unit 20 is shown in the HVAC&R system 1 of FIG. 1 for simplification, the HVAC&R system 1 can include multiple individual loads, such as, for example, a compressor unit and control solenoids, fans, and other similar or diverse loads. The controller of this invention can be wholly connected in the control lines of individual subloads of the equipment. In other words, an air conditioner may have a separate control line for the subloads of the compressor unit and the ventilation fan unit. A separate controller could be used to control either one or both of these subloads. The overall power line to all the subloads of the air conditioning unit is generally not in any way altered by the controller of this invention. In a typical installation the compressor unit can be cycled, for example, through the predetermined off-on periods while the ventilation fan motor is left running continuously throughout the entire time the thermostat is calling for cooling. Further, the usual conventional electrical grounding means is not shown in the schematic diagram of FIG. 1 as it is not a matter of particular concern in this invention.

FIG. 2 shows a HVAC&R system 11 including an electronic controller 18 on which the indicated auto-configuration and digital recycle counter programs can reside and from which the programs can be executed, wherein, as indicated, the remote sensor can utilize the temperature sensing capability of the existing thermostat 14. The controller 18 can be electrically wired to a temperature sensor 22C at the existing thermostat 14, such as using an electrical connection line 151 or otherwise configured to receive sensed temperature data from the thermostat sensor 22C, to acquire signals corresponding to sensed temperature at the thermostat's sensor. The other components shown in FIG. 2 that are common to those shown in FIG.1 can be similar thereto.

As indicated, in another option, no remote sensor need be used at all in the HVAC&R systems using the controller, such as those shown, for example, in FIGS. 1 and 2, whether at the existing thermostat or other remote sensors. The temperature signal can be estimated from OEM control signal timing and existing ASHRAE or similar data for setpoint and hysteresis temperature values.

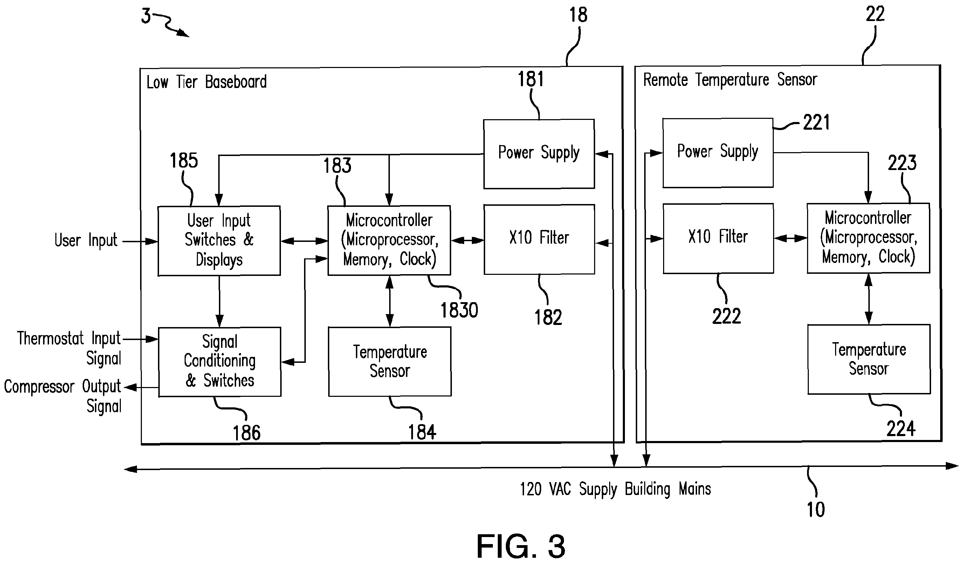

The electronic controller 18 of FIG. 1, for example, can be implemented in a stand-alone configuration or in networked configuration. FIGS. 3-11 show uses of an electronic controller 18 in combination with at least one remote temperature sensor other than the existing thermostat, such as shown in FIG. 1, that can implement the controller in three different scales of use that encompass one or both of these configurations.

FIG. 3 illustrates use of the present controller in a stand-alone configuration. This stand-alone configuration can be used, for example, in a single load unit residential application (e.g., < about 5 ton HVAC&R load unit). As shown in FIG. 3, an HVAC&R control system 3 includes controller unit 18 and optional remote temperature sensor 22, which are connected to 120 VAC supply building mains 10. As indicated, optional remote temperature sensor 22 is installed in a zone or space for which temperature control is desired. The optional remote sensor 22 includes a power supply 221 for transforming the 120 VAC power line voltage to a lower DC voltage (e.g., 5 to 12 volts) to operate the sensor components. A temperature sensor 224 senses ambient room or air space temperature in the monitored zone, such as in a temperature of from -40°C to 125°C, or other selected range. Sensor 224 can incorporate a conventional thermocouple, for example, that measures over at least this temperature range by outputting a low-voltage signal that can be correlated to the zone temperature in which the thermocouple is located. Conventional techniques for filtering and linearizing a thermocouple sensor signal can be adapted for use herewith. Microcontroller 223 includes a microprocessor, memory, and clock, and functions to transmit a high frequency signal at above 100 KHz, such as 125 KHz, through the power line 10, which signal contains digital data on the temperature sensed by sensor 224. The XI0 filter 222 is a high band pass filter that blocks transmission of signals at less than 100 kHz, and permits higher frequency signals containing data on the sensed temperature to pass through the filter.

The controller 18 can include, for example, a power supply 181 optionally including a conventional step down transformer (not shown) for transforming the power line voltage to 5-20 V (D.C.) to power the components and circuits on the baseboard of the controller 18. X10 filter 182 is a high bandpass filter that filters out signals and noise transmitted at less than 100 kHz to the controller 18 via power line 10, and permits higher frequency signals to pass and reach microcontroller 183. Microcontroller 183 can include, for example, a microprocessor for executing the indicated auto-configuration and digital recycle counter programs and performing a data collection function. Temperature sensor 184 can sense the external temperature where the controller 18 is mounted. For example, as indicated, the controller 18 can be mounted in the sheet metal or otherwise in or near the enclosure of the load unit. Temperature sensor 184 can be used to detect an external temperature near the load unit enclosure and generate signals reflecting the sensed temperature which can be processed by microcontroller 183. User input switches and displays module 185 can be arranged to receive input manually at the controller 18 and/or remotely, and display status of the controller. Signal conditioning components and switches module 186 can receive thermostat input signals and transmit an output signal under the command of the microcontroller 183 to the HVAC&R load unit to be controlled.

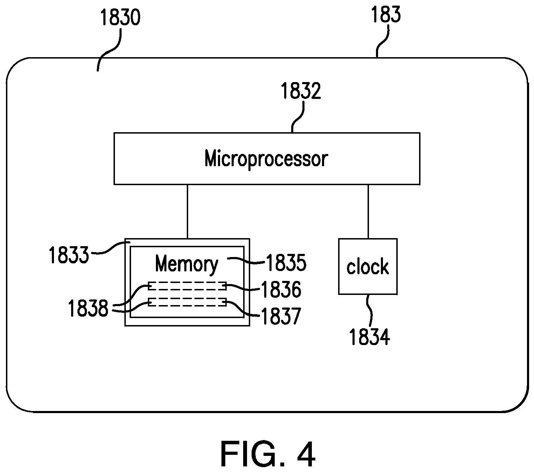

As shown in FIG. 4, microcontroller 183 can include a microprocessor 1832, a computer-readable storage medium 1833 shown as incorporating memory 1835, and clock 1834, which all have been integrated in the same chip. Microprocessor 1832, also known as a central processing unit (CPU), contains the arithmetic, logic, and control circuitry needed to provide the computing capability to support the controller functions indicated herein. The memory 1835 of the computer-readable storage medium 1833 can include non-volatile memory, volatile memory, or both. The non-volatile memory can include, for example, read-only memory (ROM), or other permanent storage. The volatile memory can include, for example, random access memory (RAM), buffers, cache memory, network circuits, or combinations thereof. The computer-readable storage medium 1833 of the microcontroller 183 can comprise embedded ROM and RAM. As discussed in connection with FIGS. 4-5 herein, read/write expansion (flash) memory for the microcontroller also can be provided. Programming and data can be stored in computer-readable storage medium 1833 including memory 1835. Program memory can be provided, for example, for the indicated auto-configuration program 1836 and digital recycle counter program 1837, as well as store menus, operating instructions and other programming such as indicated herein, parameter values and the like, for controlling the controller module 18. In combination, the auto-configuration and digital recycle counter programs provide an integrated control program 1838 residing on controller 18. Data memory can be used to store data acquired with the sensors associated with the indicated remote temperature sensor (22) related to the operation of a load device to be controlled, such as thermostat command and conditioned space, and temperature sensor 184. The clock 1834 provides a timing device that can be used for determining the onset or termination of the "on" and "off' states of the digital recycle counter 1830. The clock 1834 can be, for example, a crystal oscillator which is an electronic circuit that can use the mechanical resonance of a vibrating crystal of piezoelectric material to create an electrical signal with a very precise frequency. A conventional quartz crystal, for example, can be adapted for use as the clock in the controller 18. The clock 1834 provides timing control independent of the control signal status of line 15 of thermostat 14. The clock 1834 can be used for providing the counter function in DRC methodology, instead of pulse counting based on frequency of signals in the thermostat control signal line.

The integrated components of microcontroller 183, including the components and features indicated herein, embody a digital recycle counter ("DRC") 1830. The DRC can generally function, for example, to: (1) count in a digital manner using a clock (e.g., crystal); (2) cause switches 186 to open for a predetermined number of counts and then close for a predetermined number of counts using DRC methodology based on auto-configuration programming to control a load unit; and (3) repeat or "recycle" the opening and closing pattern indefinitely as long as a OEM (thermostat) control signal is present. As indicated, the digital recycle counter 1830 and associated program 1837 for executing these DRC functions can reside on the microcontroller 183.

Microcontroller 183 can be, for example, an 8 bit or 16 bit or larger microchip microprocessor including the indicated microprocessor, memory, and clock components, and is operable for input and execution of the indicated auto-configuration and digital recycle counter programs. Programmable microcontrollers can be commercially obtained to which the control programs indicated herein can be inputted to provide the desired control. Suitable microcontrollers in this respect include those available from commercial vendors, such as Microchip Technology Inc., Chandler, AZ. Examples of commercially available microcontrollers in this respect include, for example, the PIC16F87X, PIC16F877, PIC16F877A, PIC16F887, dsPIC30F4012, and PIC32MX795F512L-801/PT, by Microchip Technology, Inc.; Analog Devices ADSP series; Jennic JN family; National Semiconductor COP8 family; Freescale 68000 family; Maxim MAXQ series; Texas Instruments MSP 430 series; and the 8051 family manufactured by Intel and others. Additional possible devices include FPGA/ARM and ASIC's. The auto-configuration and digital recycle counter programs indicated herein can be inputted to the respective microcontrollers using industry development tools, such as the MPLAB Integrated Development Environment from Microchip Technology Inc.

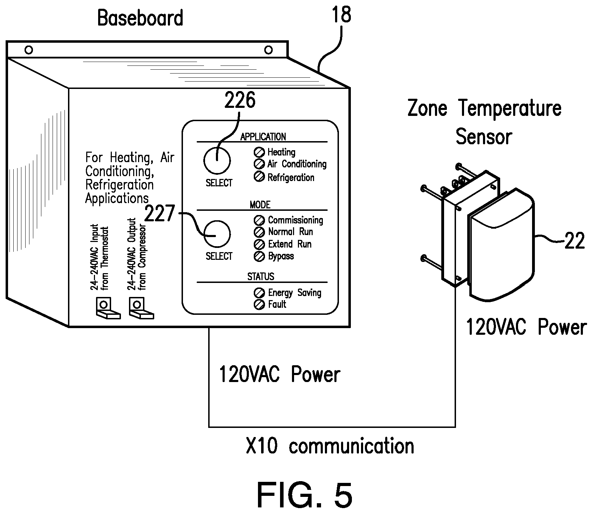

FIG. 5 is a perspective illustration of a zone temperature sensor 22 and electronic controller 18. As shown on the face of electronic controller 18, pushbutton selection button 226 can be manually operated to select the application (e.g., heating, air conditioning, refrigeration), and push button 227 can be used to select the operation mode (e.g., commissioning phase, normal run, extend run, bypass). Status lights on the controller 18 can be provided as illustrated.

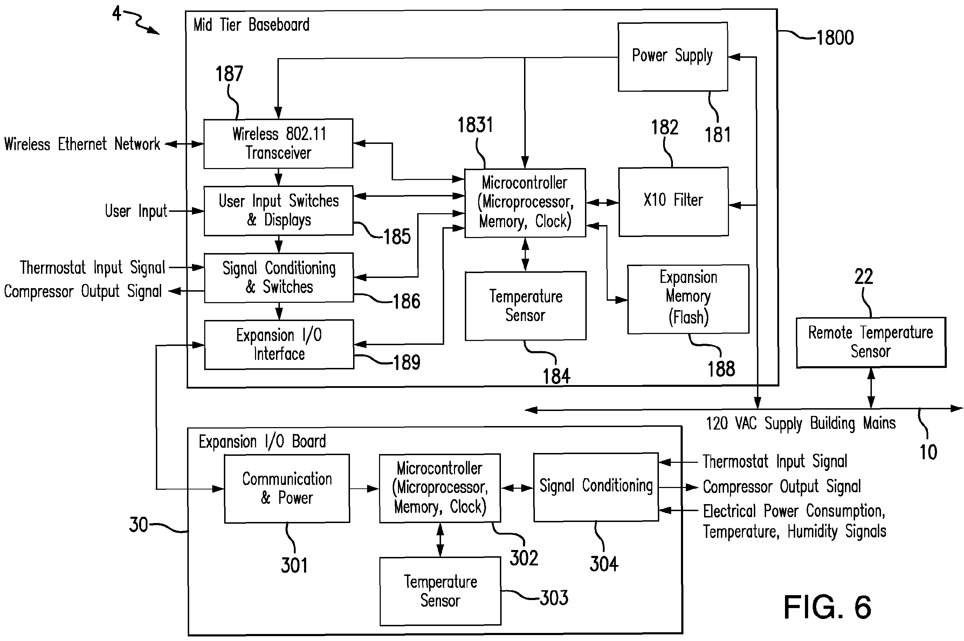

FIG. 6 illustrates use of the controller in a stand-alone or home networked intermediate scale HVAC&R configuration, such as a multiple load unit control system. As shown in FIG. 6, an HVAC&R control system 4 includes electronic controller 1800 and optional remote temperature sensor 22, which are connected to 120 VAC supply building mains 10, and expansion I/O board 30. The optional remote temperature sensor 22 can be the same as in FIG. 3 and the electronic controller 1800 can be similar to controller 18 of FIG. 3 with several modifications. Microcontroller 1831 can include a 32 bit microchip microprocessor with the indicated auto-configuration and digital recycle counter programs, data collection function, and a webserver. A wireless transceiver 187 (e.g., a wireless 802.11 transceiver) used in controller 1800 permits communication of the controller 1800 with a wireless ethernet network. The wireless transceiver 187 can connect with other wireless networks (e.g., other 802.11 networks), such as routers and laptops with wireless modems. Expansion memory 188, e.g., a USB thumb drive or similar, provides external memory for the controller. An expansion input/output interface 189 can be provided, e.g., with five input and two output connectors, which can communicate with an input/output (I/O) expansion module 30, or multiple similar I/O expansion modules. The power supply 181, XI0 filter 182, temperature sensor 184, user input switches/displays 185, and signal conditioning and switches 186, can be similar to the respective components shown in system 3 in FIG. 3.

I/O expansion module 30 can be interfaced with multiple compressor units (not shown), which can be individually controlled by controller 18. I/O expansion module 30 can include a communication and power module 301, a microcontroller 302, a temperature sensor 302 (e.g., an internal thermocouple on the PCB), and signal conditioning module 304 which communicates with thermostat input and output signals, receives electrical power consumption, temperature, and/or humidity signals. Microcontroller 302 can be, for example, a 16 bit microcontroller. The module 30 also may have four conductor connections to the baseboard (e.g., two for controller area networks (CAN's), two for power), and can be daisy chained with multiple similar I/O expansion modules, e.g., up to seven or more I/O expansion modules. The I/O expansion module 30 can be used to connect wattnode and temperature sensor inputs and provide two digital outputs controllable from the baseboard. The I/O expansion module also can be able to receive temperature information from temperature sensor 22 (not shown). The I/O expansion module 30 also can be directly powered from the 120 V mains (not shown), instead of via controller 1800.

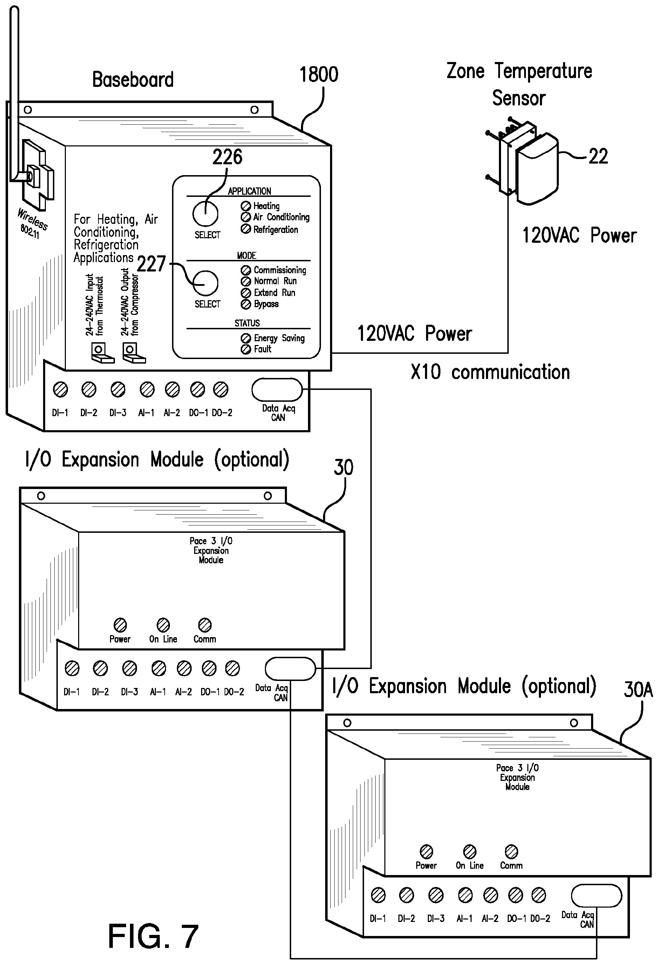

FIG. 7 is a perspective illustration of a zone temperature sensor 22, electronic controller 1800, I/O expansion module 30, and an additional I/O expansion module 30A similar to module 30. As shown on the face of electronic controller 1800, pushbutton selection button 226 can be manually operated to select the application (e.g., heating, air conditioning, and/or refrigeration), and push button 227 can be used to select the operation mode (e.g., commissioning phase, normal run, extend run, or bypass). Status lights on the controller 1800 can be provided as illustrated.

With respect to the controller system 4 shown in FIGS. 6-7, the wireless TCP/IP can serve at least two functions. First, it can be the communication method used by the installation technicians to configure the controller. Also, the homeowner or building owner or tenant can use it to connect the controller to an existing home or small business 802.11 network. As indicated, the controller 1800 in this configuration has a built-in web server and can be able to serve up its own webpages for (1) configuration, (2) status, and (3) presentation of historical information including plotting. The controller 1800 also can be offered in dual configurations depending on the application, e.g., cooling and heating or refrigeration. In this respect, the LED status lights shown on the face of the controller 1800 and I/O expansion modules 30 and 30A in FIG. 7, can relate to the indications listed in Table I.

Table I

| Base Standalone Configuration - Cooling and Heating | Options |
|---|---|
| DI-1: Thermostat Input signal <br> DO-1: Command signal to the compressor (for cooling only) <br> DO-2: Command signal to the burner or boiler (for heating only) | AI-1: Zone temperature input signal <br> AI-2: Flue temperature input signal (for heating only) <br><br> DI-3: WattNode input signal to measure kw consumption Software to estimate Gas consumption based on flue temperature and burner command signal. <br> CAN expansion modules (e.g., up to 7) to control and monitor additional equipment (water heater, additional compressors, burners,...) <br> Webpages to display historical power usage via time history plots. |
| Base Standalone Configuration - Refrigeration | Options |
| DI-1: Thermostat Input signal <br> DI-2: Electric Heater Input signal <br> DO-1: Command signal to the compressor <br> DO-2: Command signal to the electric defrost heater | AI-1: Zone temperature input signal <br> AI-2: Evaporator coil temperature, airflow, or similar <br><br> DI-3: WattNode input signal to measure kw consumption CAN expansion modules (e.g., up to 7) to control and monitor additional equipment (water heater, additional compressors, ...) <br> Webpages to display historical power usage via time history plots. |

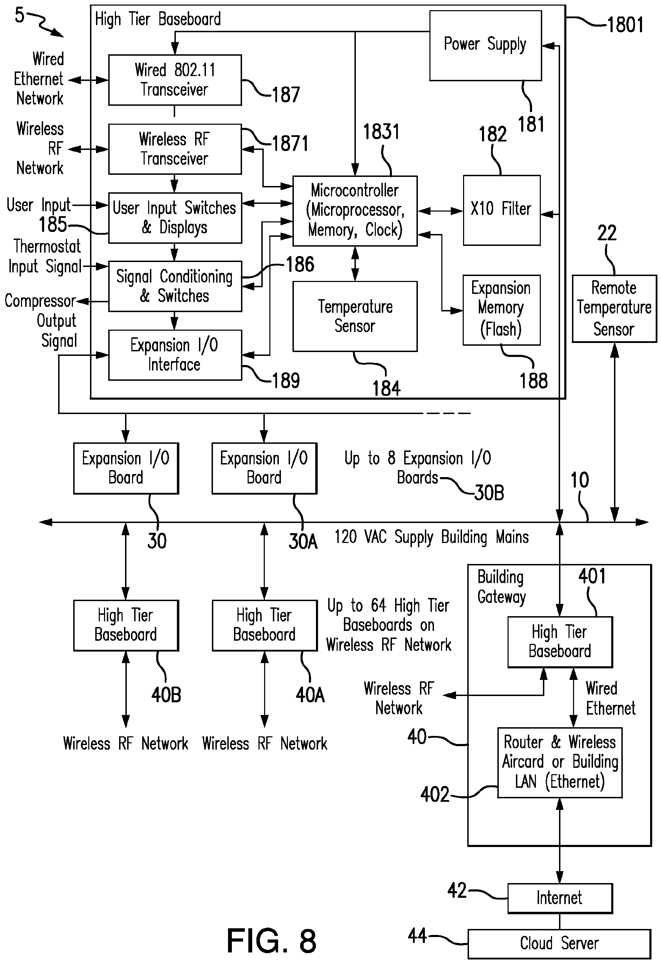

FIG. 8 illustrates use of a HVAC&R controller 1801 in a networked configuration. As shown in FIG. 8, HVAC&R control system 5 includes controller unit 1801, remote temperature sensor 22, and web-enabled data concentrators 40, 40A, 40B, which are connected to 120 VAC supply building mains 10, and expansion I/O boards 30, 30A, and 30B. The remote temperature sensor 22 can be the same as in FIG. 3 and the electronic controller 1801 can be similar to controller 1800 of FIG. 6 with several additional modifications. Microcontroller 1831 also can include a 32 bit microchip microprocessor with the indicated auto-configuration and digital recycle counter programs, data collection function, and a webserver. A wireless RF transceiver 1871 can be included in controller 1801. The wireless RF transceiver 1871 and/or wireless transceiver 187 can be used in the controller 1801 to permit communication of controller 1801 with a wireless RF network and/or wireless ethernet network, respectively. Wireless RF transceiver 187 can be, e.g. a wireless ZigBee RF 802.15.4 transceiver, using mesh networking to provide bidirectional communication with other controllers and the data concentrator 40. The power supply 181, microcontroller 1831, X10 filter 182, temperature sensor 184, user input switches/displays 185, signal conditioning and switches 186, expansion memory 188, expansion input/output interface 189, and I/O expansion module 30 (30A) can be similar to the respective components used in system 4 shown in FIG. 6. Baseboard I/O can comprise, for example, five input and two output connectors, and the expandable I/O can have, for example, up to seven CAN interfaced I/O modules for multi compressor sites as an option. The controller 1801 can communicate via wireless transceiver 1871 to one or more data concentrators, such as shown as gateways 40, 40A, and 40B. Gateway 40, and similar to units 40A and 40B, can comprise a high tier baseboard 401 comprising a network controller, and a router module 402 having a router with an aircard modem (e.g., GSM Internet access) or LAN (ethernet) for making access to the Internet 42 and a cloud server 44. The data concentrator 40 can be an off-the-shelf device and functionally serves as a gateway between TCP/IP and wireless RF. It can contain a routing function to connect the RF network from each of the networked controllers with TCP/IP. The data concentrator optionally can include one or more I/O module(s).

Although a primary purpose of the data concentrator 40 can be to serve as a gateway, it can also have the ability to sense I/O. This capability can be used in situations where the data concentrator is placed near the electrical distribution facility where electrical power consumption can be easily sensed. Both wired CAT5 or wireless GSM access can be supported. The GSM access may require a subscription to a carrier (e.g., Verizon, TMobile, etc.), and an aircard. The data concentrator can have a built in webserver with screens to configure the network and data logging features.

The cloud server 44 can use rented server space for hardware and the software can be specifically designed for the networked system. The cloud server can provide customers, technicians, and system suppliers with secure access to buildings serviced by a data concentrator. The server can host individual accounts and their access rights to data (located on the server) and networks. All data logged from the individual controllers can be sent through the RF mesh network through the data concentrator where the data is recast into TCP/IP format and transmitted to the cloud server where it can be permanently stored. The cloud server can use public domain LAMP software (Linux, Apache server, MySQL database, and PHP application language). The content management system can be based on the public domain Druple software.

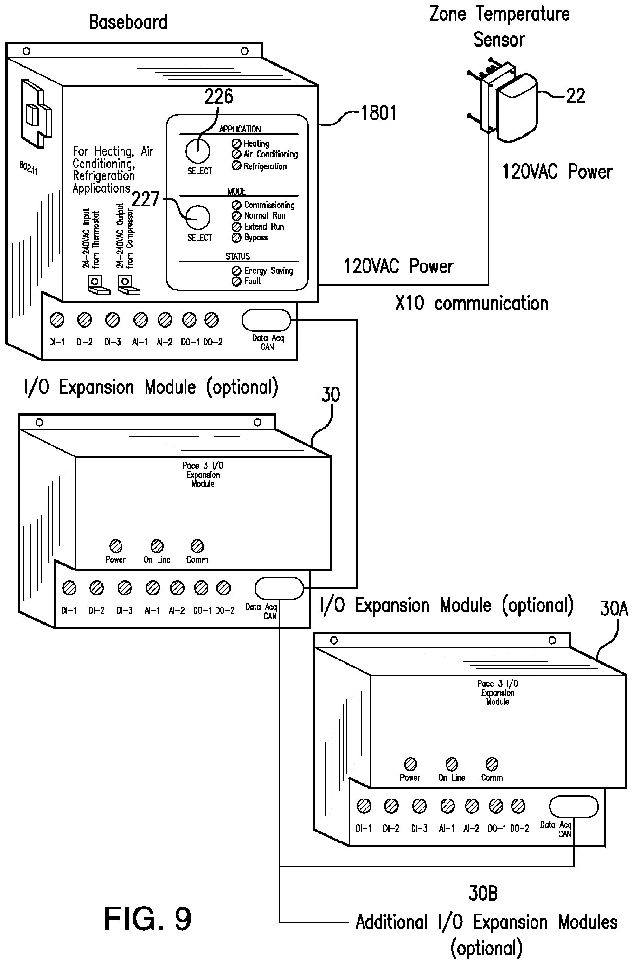

FIG. 9 is a perspective illustration of a zone temperature sensor 22, electronic controller 1801, and I/O expansion module 30, and additional I/O expansion module 30A and one or more additional I/O expansion modules 30B similar to module 30. As shown on the face of electronic controller 1801, pushbutton selection button 226 can be manually operated to select the application (e.g., heating, air conditioning, refrigeration), and push button 227 can be used to select the operation mode (e.g., commissioning phase, normal run, extend run, bypass). Status lights on the controller 1801 can be provided as illustrated.

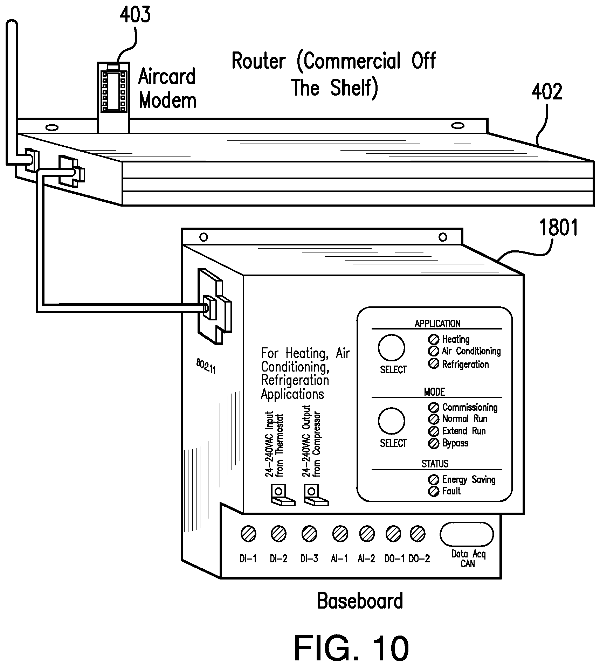

FIG. 10 is a perspective illustration of controller 1801 connected to a commercial off-the-shelf router 402 with aircard 403 for Internet access.

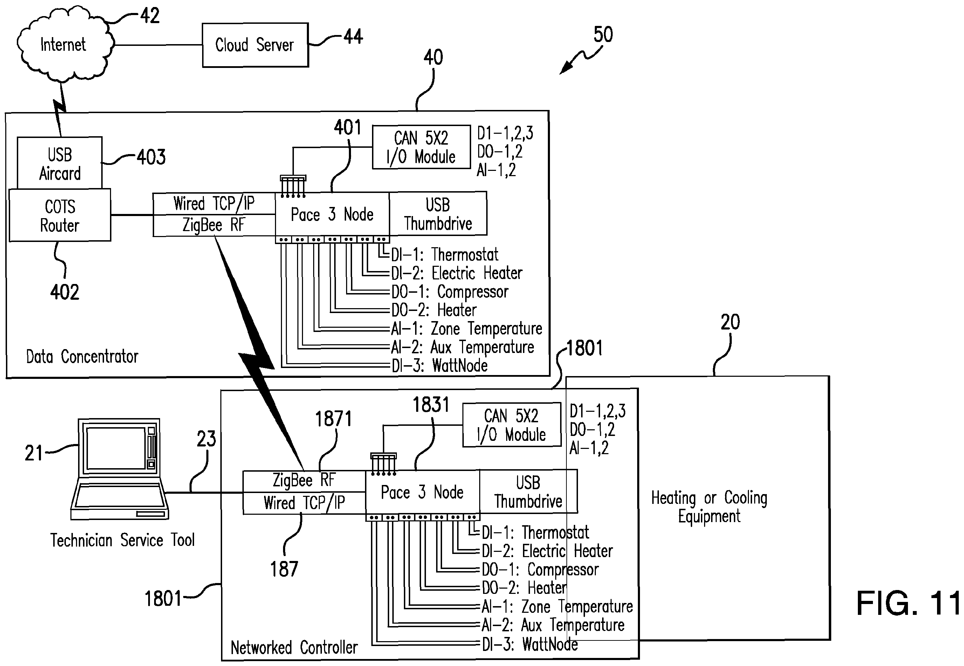

FIG. 11 shows a network controlled HVAC&R system 50 encompassing the controller 1801, data concentrator 40, Internet 42, cloud server 44, and one or more HVAC&R load units 20 under the control of the system 50. A remote user input device 21, such as a laptop computer, can communicate with the controller 1801 via a wireless or ethernet link 23. Status lights shown on the face of the controller 1801 and data concentrator 40 (and the I/O expansion modules 30 and 30A in FIG. 9) can be related to the indications listed in Table II.

Table II

| Networked Configuration | Options |
|---|---|
| DI-1: Thermostat Input signal | AI-1: Zone temperature input signal |
| DI-2: Electric heater input signal | AI-2: Flue temperature input signal (for heating only) |
| DO-1: Command signal to the compressor (for cooling only) | DI-3: WattNode input signal to measure kw consumption |
| DO-2: Command signal to the burner or boiler (for heating only) | Software to estimate Gas consumption based on flue temperature and burner command signal. CAN expansion modules (e.g., up to 7) to control and monitor additional equipment (water heater, additional compressors, refrigeration, burners,...) Secure customer website(s) (at cloud server) allowing customers to view cross building and inter building information, both current and historical. |
| | Ability to interface with demand response functions broadcast using TCP/IP Ability to directly control equipment power consumption giving customers the ability to control demand charges. |

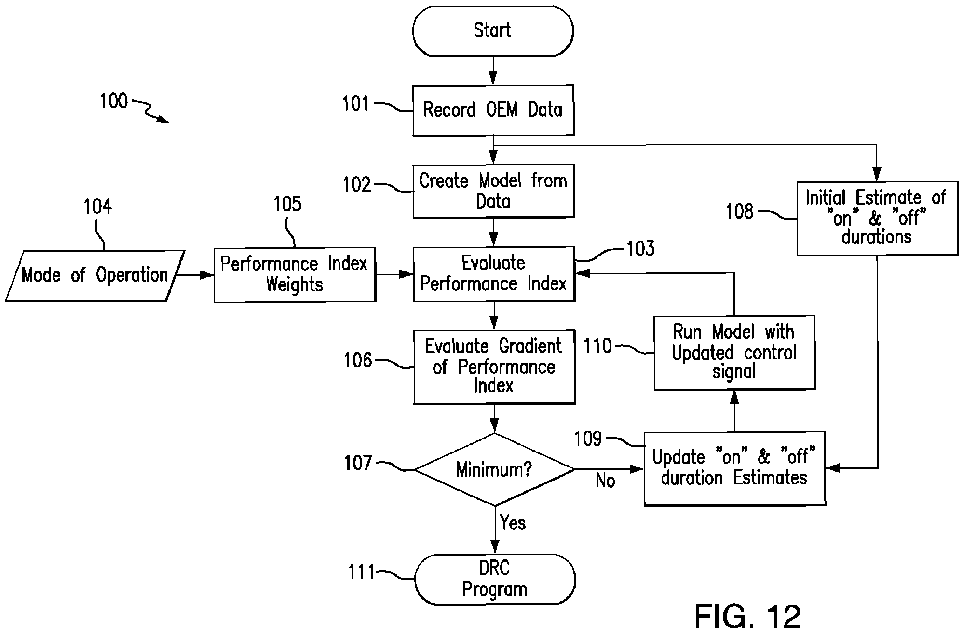

A flowchart is shown in Fig. 12 of a process 100 for using a control program encompassing auto-configuration and digital recycle counter programs executed on a controller of the present invention. Following the installation of the electronic controller that contains an auto-configuration program and a digital recycle counter program, the auto-configuration program enters into a commissioning phase. During this phase, the existing OEM controller on the load unit is allowed to run normally for several cycles of operation. Ideally, two signals are sensed and recorded during the commissioning phase, which are the thermostat command and at least the conditioned space temperature (and/or at least one other environmental measured factor). As indicated, in applications where the conditioned space temperature sensor is absent, for example, the temperature signal can be estimated from the OEM control signal timing and existing ASHRAE data for setpoint and hysteresis temperature values. In refrigeration and heating applications, additional sensor inputs can be used to improve the model accuracy.

In more detail, after installing the controller in the line connecting the existing thermostat and load unit and mounting the controller unit in the sheet metal or otherwise near the load unit, and also optionally separately installing the remote temperature sensor (e.g., as a plug-in unit) in the zone to be controlled, such as described, a technician or user can turn the controller unit on with a pushbutton or switch on the device and pushes a button or switch on the controller device to initiate a commissioning phase of the control program to record OEM data on the load unit over a plurality of cycles. The recordation of the OEM data, such as in this manner, is shown as step 101 in FIG. 12. The load unit cycles, such as for a furnace or compressor, may comprise, for example, 4-8 minutes "on"-/1-5 minutes "off"- cycles, or other cycles.

Once the performance data has been recorded in the commissioning phase, the auto-configuration program can perform the following calculations:

Stage 1: OEM Control Performance: The following metrics are estimated from the performance data collected during the commissioning period: maximum conditioned space temperature, minimum conditioned space temperature, conditioned space temperature hysteresis deadband, OEM controller cycle time, and the space temperature setpoint is estimated. From these metrics, an initial estimate of "on" and "off durations of the load cycles can be estimated, shown as step 108 in FIG. 12. As indicated, in situations where the conditioned space temperature sensor is not present or not used, for example, the space temperature set point value can be selected from ASHRAE 55 or a similar reference and the hysteresis deadband can be specified at either 2 or 4 degrees Fahrenheit (°F), for example, or other temperature ranges, depending on the duration of the OEM cycle time and the outside ambient temperature. The maximum and minimum conditioned space temperature values can then be calculated using the temperature setpoint and hysteresis values.

Stage 2: Modeling: The parameters of a dynamic mathematical model are fit to the commissioning performance data to model the behavior of the installed equipment, such as indicated as step 102 in FIG. 12. The input to the model is the OEM environmental controller signal and the outputs of the model are the conditioned space temperature (or other environmental factor) and the equipment power consumption for both electrically and combustion powered equipment. The model form, based on Newton's Law of Cooling, contains proportional and possibly delay or capacitance terms that are used to model the residual thermal energy in the cooling coil or boiler and the transport dynamics of the working fluid through the ductwork or piping. The dynamic mathematical model is used to model the thermal mass and thermal resistance of the conditioned space. Power consumption is estimated based on the controller signal and optionally equipment nameplate information.

Stage 3: Optimization: Using the model developed in Stage 2, a numerical search method is employed to estimate the optimal "on" and "off' times that define a DRC command signal to be applied by the controller on the load unit in lieu of OEM signal control. This is shown as step 103 in FIG. 12. The performance index that is calculated contains three terms: (1) energy consumption, (2) conditioned space temperature variation from setpoint, and (3) conditioned space temperature variation. Each term is normalized and has an associated scalar penalty weight variable assigned to it. By altering the ratio of the three penalty weights, the program becomes capable of three distinct modes of automatic operation; minimum energy control, demand response control, and power limiting control. A mode of operation is selected (step 104) and an application of any selected performance index weightings (step 105) are also inputted for purposes of conducting the performance index evaluation (step 103).

The cost of electricity is based on two items; (1) the total kW consumption and (2) the Peak kW demand. The total kW consumption is (ideally) proportional to the equipment runtime. The Peak kW demand is the largest average value of the kW consumption in a 15 or 30 minute interval or window. The Peak kW demand value is used to determine how electricity charges are established. Electricity is charged in different "declining block rates" of kWh, each of which has a kWh cost associated with it. The first block (the one filled first) is the most expensive; the second block (the one filled next) is less expensive, and so on. Given a constant total kW consumption, the total cost of electricity can be varied by the Peak kW demand value, the smaller the value of the Peak kW demand is made, the lower the cost. The cost of oil and gas is based on only one item; the total consumption, a separate charge for peak demand is normally not present for oil and gas. The following time integrated quadratic performance index can be the basis for the minimization:

$$ J = \int_0^\tau \; \left[ \left( Qu^2 \right) + Re_1^2 + Se_2^2 \right] d\tau $$

where: T = time duration of the performance data set (typically one or several cycles of the OEM controller); $u$ = DRC binary control signal consisting of regularly spaced "on" and "off" times, u has a value of 1 when the signal is "on" and a value of 0 when the signal is "off'; $e_1$ = Estimated temperature error between the DRC algorithm and the OEM control temperature set point; $e_2$ = Estimated temperature variation of the model when excited by the DRC control signal; $Q$ = Weight variable (penalty) placed on the run time of the DRC control (this minimizes accumulated run time of DRC and therefore the energy consumption of the HVAC&R system); $R$ = Weight variable (penalty) placed on the importance of maintaining the set point temperature at the OEM set value (this value is given or assigned when one wants to achieve the set point temperature); $S$ = Weight variable (penalty) placed on the importance of the controlled temperature variation. Increasing or assigning weight to the S value will decrease variation in the controlled temperature and result in more of a straight line controlled temperature response, thus minimizes temperature fluctuation.

When the DRC program operates in the minimum energy mode, the "$Q$" weight value is chosen such that the $Qu^2$ has a much greater magnitude than the "$R$" value and a slightly greater magnitude than the "$S$" value and the performance index, $J$, is minimized by calculating the optimal "$u$" trajectory. This means that minimizing the overall runtime of the DRC control is more important than maintaining set point temperature, but maintaining a small temperature variation around the set point is also important. This method of control can be applied to electrically or fossil fuel (gas and oil) powered heating and cooling devices. The stage 2 model is used to create the temperature and power signals required to evaluate the error terms, $e_1$ and $e_2$, in the performance index. While in the minimum energy mode, the DRC program operates in a manner that primarily minimizes the energy consumption of the equipment while secondarily maintaining conditioned space temperatures near the OEM controller setpoint. Generally, a small error exists between the DRC temperature setpoint and the OEM controller setpoint; however, the DRC temperature variation will normally be less than that of the OEM controller.

When the DRC program operates in the Power Limiting mode, the "$R$" weight value is chosen such that the $Re_1^2$ has a much greater magnitude than the "$Q$" term and a slightly greater magnitude than the "$S$" term, and the performance index, $J$, is minimized by calculating the optimal "$u$" trajectory. While in the Power Limiting mode, the DRC is forced to obey the performance index, but is also subject to constraining the overall DRC runtime to a fraction of the OEM runtime, typically the fraction ranges from about 80% to 90%. The resulting effect is a DRC control signal that achieves the OEM setpoint but forces it to occur in a manner that reduces the overall conditioned space temperature time rate of change (gradient) while the space is being cooled or heated. Since the conditioned space temperature gradient is directly proportional to the power consumed per unit time, this method of control effectively limits the electrical demand charge and is most effectively used on equipment that is electrically powered. This mode, including the previously described weight settings, can also be used for demand response control. While in Demand Response mode, the DRC program primarily operates the equipment to maintain a temperature setpoint provided from an external source and communicated to the electronic controller via the wired or wireless networking of the present invention. This mode is used to address the demand response function integral to most Energy Service Companies (ESCOs). While in the temperature regulation mode, temperature setpoint commands from the OEM controller are ignored.

During the optimization of the DRC program using the auto-configuration program, limits (constraints) are imposed on the allowable "on" and "off' time durations of the "u" signal to address issues including short cycling, oil starvation, condensation, and other machine and system health issues. The auto-configuration program can perform a model based optimization calculation that automatically determines the optimal "on" and "off' time durations for the DRC program. The optimization of the DRC program can include, for example, the loop including steps 103, 106, 107, 109 and 110 in FIG. 12.

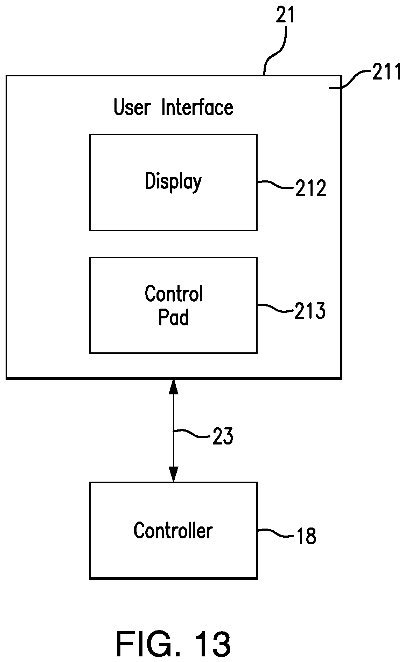

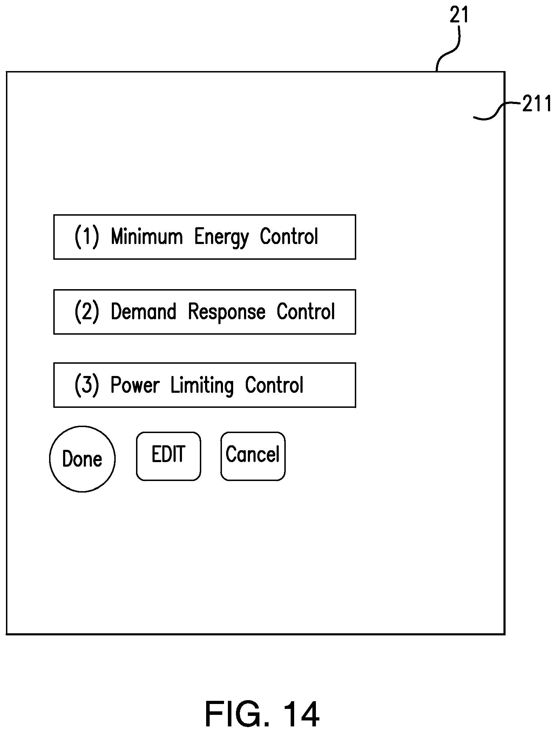

Following completion of Stage 3, the control program transitions to its normal run phase under the control of the DRC program 111. In a normal run phase, the digital recycle counter (DRC) program can be in control of the equipment using the optimized "on" and "off' time values calculated during commissioning using the auto-configuration program. In this normal run phase, the DRC program is capable of executing in any of the three modes comprising minimum energy, demand response, or power limiting. For example, a mode of operation can be based on a default setting on the controller and/or a mode selected by a user via a user input device on the controller or a remote input device 21 that can communicate with the controller 18 (1800, 1801), such as shown in FIG. 13. The input device 21 can have, for example, a user interface 211 including a display 212 and control pad 213. For example, a mode of operation can be selected and inputted to controller 18 (1800, 1801) via the user interface 211 via the communication link 23 (e.g., RF wireless, ethernet). In the illustration of FIG. 14, an illustrative configuration mode selection menu is displayed on the display 211 of input device 21, showing three distinct modes of automatic operation available as selection options (which can override any default setting(s)) in this respect), which include: (1) Minimum Energy Control; (2) Demand Response Control; or (3) Power Limiting Control. One of these modes of operation can be selected for implementation by controller 18 (1800, 1801). Selection of one of the configuration mode options (1), (2), and (3) can be done directly via a touchscreen interface or as visually guided by a cursor arrow, such as directed by a computer touchpad or mouse cursor arrow, or by key stroke via a computer keyboard, or audio recognition command control, and so forth. A tentative selection amongst the options can be shown, for example, by highlighting, and so forth. Option selections can be confirmed, for example, via a touchscreen button stroke, mouse clicking, via a guided keyboard key stroke, audio command, and so forth. If no configuration mode selection is inputted by a user, a default selection can be encoded in the programs, which would take effect. After selection of a configuration mode, either by user input or by default, a weighting variable Q, R, and S can be automatically assigned to place importance on energy consumption, temperature regulation, and power limiting based on previously selected configuration mode, in the performance index formula used for determining J, or an additional display, not shown, can be displayed on input device 21 for permitting a technician or user to make adjustments to these values.

The electronic controller device can comprise an override mode that is capable of further adjusting the digital recycle counter for a period of time. The electronic controller device can be operable wherein the override mode responds to temporary factors affecting temperature or humidity or both.

In these manners, for example, an electronic controller having the indicated auto-configuration and digital recycle counter programs is operable to substitute a thermostat's control signal with a modulated binary control signal that has been preconfigured in an automated manner. Amongst other benefits and advantages, existing HVAC&R systems, for example, can embody the present controller and other associated sensors and add-ons such as illustrated herein to improve energy consumption and reduce energy costs of heating, cooling, and refrigeration equipment, monitor, and/or record comfort and energy consumption information (data collection), and/or communicate control and/or data capture information bidirectionally through the Internet and wireless networking. Through Internet connectivity, the systems using the controller can be capable, for example, of supporting demand response control, for example, over a range of curtailment cycles ranging from 0% (equipment off - level 1) to intermediate cycle ranges (levels 2 and 3), as well as energy saving validation using the data collection feature, and power limiting.

Where the user of a controller of the present invention is participating in a utility energy efficiency program, for example, the networked system also can provide data capture and records on energy consumption and/or curtailment, which can be acceptable to an energy service company (ESCO) or power utility provider. The power limiting function also can ensure the equipment never operates in a manner that draws more than a setpoint power value (this is for electrical consumption only). This feature can provide consumers with an effective method to control electricity demand charges. Also through optional Internet connectivity, the system can be capable of interfacing with building Energy Management Systems (EMS) that support Internet IP protocol as well as SmartGrid functions that use the Internet as their communication transport mechanism.

The present invention will be further clarified by the following examples, which are intended to be only exemplary of the present invention. Unless indicated otherwise, all amounts, percentages, ratios and the like used herein are by weight.

EXAMPLES

Example 1:

This example illustrates the temperature behavior of the conditioned space while operating the algorithm in the minimum energy mode for a cooling application. In the three plots shown in FIGS. 15, 16, and 17, FIG. 15 shows the behavior of the OEM control ("OEM Control Command") and its corresponding conditioned space temperature (above). The conditioned space temperature varies between high and low deadband values (68 °F and 66 °F). The OEM temperature setpoint value is halfway between the deadbands and denoted as T*. The control objective of the OEM thermostat is to maintain the conditioned space temperature at T* with variations not to exceed the high and low deadband values.

The plots of FIGS. 16 and 17 show two DRC control signals and their associated conditioned space temperatures for two different settings of the weight parameters. In the plot of FIG. 16, the parameters of the indicated formula for calculating the performance index ("J") are set to Q = 10, R=1, and S=1. This weighting places a significant penalty on reducing the runtime and a somewhat significant penalty on maintaining the DRC temperature setpoint at the OEM value and maintaining a small variation in the temperature signal. As seen in the temperature plot of FIG. 16, the temperature never reaches the low value of the temperature deadband (66 °F), but rather varies between the high deadband value (68 °F) and the OEM setpoint value (T*). The overall period of the temperature profile is unchanged from the OEM value (t2), however the runtime is reduced from 16 to 15.5 time units.

In the plot of FIG. 17, the parameters of the performance index formula are set to Q = 10, R=0.1, and S=1. As seen in the temperature plot of FIG. 17, the temperature does not reach the OEM temperature setpoint and remains in the upper 30% of the OEM temperature range. The overall period of the temperature profile is unchanged from the OEM value (t2), and the runtime is reduced from 16 to 8 time units.

Example 2:

This example illustrates the temperature behavior of the conditioned space while operating the algorithm in the power limit mode for a cooling application. In the two plots of FIGS. 18 and 19, the plot of FIG. 18 shows the behavior of the OEM control ("OEM Control Command") and its corresponding conditioned space temperature (above). The conditioned space temperature varies between high and low deadband values (T-hi and T-lo). The OEM temperature setpoint value is halfway between the deadbands and denoted as T*. The control objective of the OEM thermostat is to limit or minimize the runtime during time intervals of t1 time units or less (this is illustrative and chosen as the "on" time of the OEM controller). This time value may correspond to the time window used for calculation of the electrical demand charge (15 or 30 minutes typically). A second objective is for the DRC algorithm to maintain the same temperature setpoint as the OEM controller.

In the plot of FIG. 19, the weight parameters of the integrated quadratic performance index formula are set to Q = 1, R=10, and S=1. An 80% runtime constraint is also applied to the DRC control signal (target the DRC runtime in a time period = t1 to be 80% of the OEM runtime). As seen in the temperature plot of FIG. 19, the temperature does maintain the OEM temperature setpoint on average; however the overall temperature time rate of change is less than that of the OEM controller while the conditioned space is being cooled. During t1 time units the OEM controller runtime is 8 units and the DRC runtime is 6.2 time units, a reduction of approximately 20% as desired. An associated effect is the lengthening of the period of the DRC controller to be greater than that of the OEM controller (OEM period = t2, DRC period = t11 - t3).

As shown in the example, a controller including a control program with an auto-configuration mode that performs a model based optimization calculation can automatically determine the optimal "on" and "off' time durations for a DRC program.

**Claims**

1. An electronic controller device (18) for automatic control of a heating, ventilating, air conditioning or refrigeration (HVAC&R) system (1), comprising ÷ a digital recycle counter (1830) that is capable of intercepting a thermostat command for cooling, refrigeration, or heating and replacing said thermostat command with a modulated binary signal that operates in an "on" state or "off" state, and **characterized by**
a computer-readable storage medium (1833) that comprises a program (1838) that includes an auto-configuration mode that is capable of determining a base line performance of said HVAC&R system (1) through a commissioning phase and is capable of determining an adjusted performance based on energy consumption, temperature regulation, humidity regulation, or power limit or any combination thereof, and wherein said program (1838) is capable of adjusting said digital recycle counter "on" and "off" states based on said adjusted performance determination.

2. The electronic controller device (18) of claim 1, wherein said electronic controller device (18) further comprises an override mode that is capable of further adjusting said digital recycle counter (1830) for a period of time.

3. The electronic controller device (18) of claim 2, wherein said electronic controller device (18) is operable wherein said override mode responds to temporary factors affecting temperature or humidity or both.

4. The electronic controller device (18) of claim 1, wherein said "on" state has a constant value and duration signal for each "on" state and said "off" state has a constant value and duration signal for each "off" state for said adjusted performance.

5. The electronic controller device (18) of claim 1, wherein said electronic controller device is operable wherein said determining of said adjusted performance occurs two or more times.

6. The electronic controller device (18) of claim 1, wherein said electronic controller device (18) is operable wherein said commissioning phase is repeated one or more times using current performance of the HVAC&R system (1) as the base line performance.

7. The electronic controller device (18) of claim 1, wherein said electronic controller device (18) is operable wherein said auto-configuration mode processes data from the base line performance or configuration data to provide estimates on a maximum conditioned space temperature, a minimum conditioned space temperature, a conditioned space temperature hysteresis deadband, a controller cycle time, and a space temperature set point and creating a dynamic mathematical model based on said data, and determining an adjusted dynamic mathematical model from inputted performance requirements based on energy consumption, temperature regulation, humidity regulation, or power limit or any combination thereof, and adjusting said digital recycle counter (1830) based on said adjusted dynamic mathematical model.

8. The electronic controller device (18) of claim 1, wherein said program (1838) of said electronic controller device (18) is further operable to process sensor signals related to compressor pressure, fluid rate, or both, sensed at and received from a HVAC&R heating or refrigeration load unit.

9. A heating, ventilating, air conditioning or refrigeration (HVAC&R) system (1) comprising a heating, ventilating, air conditioning or refrigeration unit (20) and said electronic controller device (18) of claim 1 that substitutes a thermostat control signal of said HVAC&R system (1) with said modulated binary control signal from said electronic controller device (18).

10. A system for automatic control of a heating, ventilating, air conditioning or refrigeration (HVAC&R) system (1), comprising:

a thermostat (14), an electronic controller device (18) according to Claim 1, and at least one HVAC&R load unit (20), operably connected to a power supply line (10), wherein
the electronic controller (18) comprising (a) a digital recycle counter (1830) that is capable of intercepting a thermostat command for the at least load unit (20) and replacing said thermostat command with a modulated binary signal that operates in an "on" state or "off" state, and (b) a computer-readable storage medium (1833) that comprises a program (1838) that includes an auto-configuration mode that is capable of determining a base line performance of said HVAC&R system (1) through a commissioning phase and is capable of determining an adjusted performance based on energy consumption, temperature regulation, humidity regulation, or power limit or any combination thereof, and wherein said program (1838) is capable of adjusting said digital recycle counter "on" and "off" states based on said adjusted performance determination.

11. The system of claim 10, further comprising at least one remote temperature (22, 22A) and/or humidity sensor (22B) being operable for sensing a temperature and/or humidity in a zone to be temperature or humidity conditioned and the electronic controller device (18) operable to obtain a temperature signal therefrom.

12. A system for automatic control of a heating, ventilating, air conditioning or refrigeration (HVAC&R) system (1), comprising:

a thermostat (14), an electronic controller device (18) according to Claim 1, and at least one remote temperature sensor (22, 22A), at least one HVAC&R load unit (20), operably connected to a power supply line (10), wherein the at least one remote temperature sensor (22, 22A) being operable for sensing a temperature in a zone to be temperature or humidity conditioned and transmitting a signal thereon to the electronic controller (18) via the power supply line (10); and

the electronic controller (18) comprising (a) a digital recycle counter (1830) that is capable of intercepting a thermostat command for the at least load unit (20) and replacing said thermostat command with a modulated binary signal that operates in an "on" state or "off" state, and (b) a computer-readable storage medium (1833) that comprises a program (1838) that includes an auto-configuration mode that is capable of determining a base line performance of said HVAC&R system (1) through a commissioning phase and is capable of determining an adjusted performance based on energy consumption, temperature regulation, humidity regulation, or power limit or any combination thereof, and wherein said program (1838) is capable of adjusting said digital recycle counter "on" and "off" states based on said adjusted performance determination.

13. A method for automatically controlling and managing load demand and operation of a HVAC&R load unit (20) powered by electricity, wherein a controller (18) comprising a digital recycle counter (1830) is electrically connected in a control signal line (15, 24) between a thermostat (14) for a load device (20) and an equipment load control switch (26) for the load device (20), **characterized by** the steps of:

conducting a commissioning phase with the controller (18) comprising, while operating the load device (20) for a plurality of cycles of operation, executing a commissioning program (1838) obtained from a computer-readable storage medium (1833) which is further included in the controller (18) that includes an auto-configuration mode program (1836), wherein the commissioning program (1838) determines a base line performance of the HVAC&R load unit (20) through a commissioning phase of operation of the load device (20), and determines an adjusted performance based on energy consumption, temperature regulation, humidity regulation, or power limit or any combination thereof for the load device (20); and

intercepting at least one thermostat command for cooling, refrigeration, or heating at the controller (18) and said digital recycle counter (1830) replacing said thermostat command with a modulated binary signal that operates in an "on" state or "off" state for adjusting the "on" and "off" states of said digital recycle counter with a digital recycle counter program (1837) based on said adjusted performance determination.

14. The method of claim 13, comprising applying the program (1838) to a single or multi capacity compressor of an air conditioning system wherein the compressor is operable to receive a cooling command from a thermostat or BMS to produce supply air used to cool a conditioned space, wherein the applied program minimizes electrical energy usage while maintaining conditioned space temperature near the OEM controller setpoint.

15. The method of claim 13, applied in a demand response temperature control mode of applying the program (1838) to a single or multi capacity compressor of an air conditioning system subject to an externally supplied temperature setpoint communicated to the electronic controller via either wired or wireless networking.

16. The method of claim 13, applied in a power limiting mode of applying the program (1838) to a single or multi capacity compressor of an air conditioning system to regulate the power drawn by the equipment to be less than or equal to a power limit setpoint, wherein the setpoint being an internal parameter setting or communicated to the controller through a wired or wireless communication port thereof.

**17.** The method of claim 13, wherein the commissioning mode being continually and/or periodically re-executed, automatically or manually, to capture temperature effects of changing loads in a mathematical model of the program (1838) used for the optimization.

**Patentansprüche**

**1.** Elektronische Controller-Vorrichtung (18) zur automatischen Steuerung bzw. Regelung eines Heiz-, Lüftungs-, Klima- oder Kälte(HVAC&R)-Systems (1), umfassend einen digitalen Rückführ- bzw. Recycle-Zähler (1830), der in der Lage ist, einen Thermostatbefehl zum Kühlen, Kalthalten oder Heizen abzufangen und den Thermostatbefehl durch ein moduliertes Binärsignal zu ersetzen, das in einem "Ein"-Zustand oder "Aus"-Zustand arbeitet, und **gekennzeichnet durch**
ein computerlesbares Speichermedium (1833), das ein Programm (1838) umfasst, das einen Autokonfigurationsmodus umfasst, der in der Lage ist, eine Baseline- bzw. Ausgangszustandsleistung des HVAC&R-Systems (1) durch eine Inbetriebnahmephase hindurch zu bestimmen, und in der Lage ist, eine angepasste Leistung basierend auf Energieverbrauch, Temperaturregulierung, Feuchtigkeitsregulierung oder Leistungsgrenze oder einer Kombination davon zu bestimmen, und wobei das Programm (1838) in der Lage ist, den digitalen Rückführ- bzw. Recycle-Zähler basierend auf der Bestimmung der angepassten Leistung auf "Ein"- und "Aus"-Zustände einzustellen.

**2.** Elektronische Controller-Vorrichtung (18) nach Anspruch 1, wobei die elektronische Controller-Vorrichtung (18) ferner einen Override- bzw. Übersteuerungsmodus aufweist, der in der Lage ist, den digitalen Recycle-Zähler (1830) für eine Zeitperiode weiter einzustellen.

**3.** Elektronische Controller-Vorrichtung (18) nach Anspruch 2, wobei die elektronische Controller-Vorrichtung (18) operabel ist, wobei der Übersteuerungsmodus auf temporäre Faktoren reagiert, welche die Temperatur oder Feuchtigkeit oder beides beeinflussen.

**4.** Elektronische Controller-Vorrichtung (18) nach Anspruch 1, wobei der "Ein"-Zustand ein Signal mit konstantem Wert und Dauer für jeden "Ein"-Zustand aufweist und der "Aus"-Zustand ein Signal mit konstantem Wert und Dauer für jeden "Aus"-Zustand für die angepasste Leistung aufweist.

**5.** Elektronische Controller-Vorrichtung (18) nach Anspruch 1, wobei die elektronische Controller-Vorrichtung operabel ist, wobei das Bestimmen der angepassten Leistung zwei oder mehrere Male erfolgt.

**6.** Elektronische Controller-Vorrichtung (18) nach Anspruch 1, wobei die elektronische Controller-Vorrichtung (18) operabel ist, wobei die Inbetriebnahmephase ein oder mehrere Male unter Verwendung der aktuellen Leistung des HVAC&R-Systems als Baseline- bzw. Ausgangszustandsleistung wiederholt wird.

**7.** Elektronische Controller-Vorrichtung (18) nach Anspruch 1, wobei die elektronische Controller-Vorrichtung (18) operabel ist, wobei der Autokonfigurationsmodus Daten von der Baseline- bzw. Ausgangszustandsleistung oder Konfigurationsdaten verarbeitet, um Schätzwerte für eine maximale Temperatur des klimatisierten Raums, eine minimale Temperatur des klimatisierten Raums, eine Temperaturhysterese-Totzone des klimatisierten Raums, eine Controller-Zykluszeit und einen Raumtemperatursollwert bereitzustellen und ein dynamisches mathematisches Modell basierend auf den Daten zu erzeugen und ein angepasstes dynamisches mathematisches Modell aus eingegebenen Leistungsanforderungen basierend auf Energieverbrauch, Temperaturregulierung, Feuchtigkeitsregulierung, oder Leistungsgrenze oder einer Kombination davon zu bestimmen, und den digitalen Rückführ- bzw. Recycle-Zähler (1830) basierend auf dem angepassten dynamischen mathematischen Modell anzupassen bzw. einzustellen.

**8.** Elektronische Controller-Vorrichtung (18) nach Anspruch 1, wobei das Programm (1838) der elektronischen Controller-Vorrichtung (18) ferner operabel ist, Sensorsignale zu verarbeiten, die den Kompressordruck, die Fluidrate oder beides betreffen, die von einer HVAC&R Heiz- oder Kältelasteinheit erfasst und empfangen werden.

**9.** Heiz-, Lüftungs-, Klima- oder Kälte(HVAC&R)-System umfassend eine Heiz-, Lüftungs-, Klima- oder Kälteeinheit (1) und die elektronische Controller-Vorrichtung (18) nach Anspruch 1, das ein Thermostatsteuer- bzw. -regelsignal des HVAC&R-Systems (1) durch das modulierte binäre Steuer- bzw. Regelsignal von der elektronischen Controller-Vorrichtung (18) ersetzt.

**10.** System zur automatischen Steuerung bzw. Regelung eines Heiz-, Lüftungs-, Klima- oder Kälte(HVAC&R)-Systems (1), umfassend:

ein Thermostat (14), eine elektronische Controller-Vorrichtung (18) nach Anspruch 1 und zumindest eine HVAC&R-Lasteinheit (20), die operabel mit einer Strom- bzw. Leistungsversorgungsleitung (10) verbunden ist, wobei

wobei der elektronische Controller (18) umfasst: (a) einen digitalen Rückführ- bzw. Recycle-Zähler (1830), der in der Lage ist, einen Thermostatbefehl für die zumindest eine Lasteinheit (20) abzufangen und den Thermostatbefehl durch ein moduliertes Binärsignal zu ersetzen, das in einem "Ein"-Zustand oder "Aus"-Zustand arbeitet, und (b) ein computerlesbares Speichermedium (1833), das ein Programm (1838) umfasst, das einen Autokonfigurationsmodus umfasst, der in der Lage ist, eine Baseline- bzw. Ausgangszustandsleistung des HVAC&R-Systems (1) durch eine Inbetriebnahmephase hindurch zu bestimmen, und in der Lage ist, eine angepasste Leistung basierend auf Energieverbrauch, Temperaturregulierung, Feuchtigkeitsregulierung oder Leistungsgrenze oder einer Kombination davon zu bestimmen, und wobei das Programm (1838) in der Lage ist, den digitalen Rückführ- bzw. Recycle-Zähler basierend auf der Bestimmung der angepassten Leistung auf "Ein"- und "Aus"-Zustände einzustellen.

11. System nach Anspruch 10, ferner umfassend zumindest einen entfernten Temperatur- (22, 22A) und/oder Feuchtigkeitssensor (22B), die operabel sind, eine Temperatur und/oder Feuchtigkeit in einer zu temperierenden oder feuchtigkeitszuregulierenden Zone zu erfassen, und wobei die elektronische Controller-Vorrichtung (18) betriebsfähig ist, ein Temperatursignal davon zu erhalten.

12. System zur automatischen Steuerung bzw. Regelung eines Heiz-, Lüftungs-, Klima- oder Kälte(HVAC&R)-Systems (1), umfassend:

ein Thermostat (14), eine elektronische Controller-Vorrichtung (18) nach Anspruch 1 und zumindest einen entfernten Temperatursensor (22, 22A) und zumindest eine HVAC&R-Lasteinheit (20), die operabel mit einer Strom- bzw. Leistungsversorgungsleitung (10) verbunden ist, wobei

der zumindest eine entfernte Temperatursensor (22, 22A) operabel ist, eine Temperatur in einer zu temperierenden oder feuchtigkeitszuregulierenden Zone zu erfassen und ein Signal darauf bzw. daran an die elektronische Controller-Vorrichtung (18) über die Leistungsversorgungsleitung (10) zu übertragen; und

wobei der elektronische Controller (18) umfasst: (a) einen digitalen Rückführ- bzw. Recycle-Zähler (1830), der in der Lage ist, einen Thermostatbefehl für die zumindest eine Lasteinheit (20) abzufangen und den Thermostatbefehl durch ein moduliertes Binärsignal zu ersetzen, das in einem "Ein"-Zustand oder "Aus"-Zustand arbeitet, und (b) ein computerlesbares Speichermedium (1833), das ein Programm (1838) umfasst, das einen Autokonfigurationsmodus umfasst, der in der Lage ist, eine Baseline- bzw. Ausgangszustandsleistung des HVAC&R-Systems (1) durch eine Inbetriebnahmephase hindurch zu bestimmen, und in der Lage ist, eine angepasste Leistung basierend auf Energieverbrauch, Temperaturregulierung, Feuchtigkeitsregulierung oder Leistungsgrenze oder einer Kombination davon zu bestimmen, und wobei das Programm (1838) in der Lage ist, den digitalen Rückführ- bzw. Recycle-Zähler basierend auf der Bestimmung der angepassten Leistung auf "Ein"- und "Aus"-Zustände einzustellen.

13. Verfahren zur automatischen Steuerung bzw. Regelung und Verwaltung einer Lastanforderung und eines Betriebs einer HVAC&R-Lasteinheit (20), die mit Elektrizität betrieben wird, wobei ein Controller (18), der einen digitalen Rückführ- bzw. Recycle-Zähler (1830) umfasst, elektrisch in einer Steuer- bzw. Regelsignalleitung (15, 24) zwischen einem Thermostat (14) für eine Lastvorrichtung (20) und einem Gerätelaststeuer- bzw. -regelschalter (26) für die Lastvorrichtung (20) verbunden ist, **gekennzeichnet durch** die Schritte:

Durchführen einer Inbetriebnahmephase mit dem Controller (18), umfassend, während die Lastvorrichtung (20) für eine Mehrzahl von Betriebszyklen betrieben wird, das Ausführen eines Inbetriebnahmeprogramms (1838), das von einem computerlesbaren Speichermedium (1833) erhalten wird, das ferner in dem Controller (18) enthalten ist, das ein Autokonfigurationsmodusprogramm (1863) umfasst, wobei das Inbetriebnahmeprogramm eine Baseline- bzw. Ausgangszustandsleistung der HVAC&R-Lasteinheit (20) durch eine Inbetriebnahmephase des Betriebs der Lastvorrichtung (20) hindurch bestimmt und eine angepasste Leistung basierend auf Energieverbrauch, Temperaturregulierung, Feuchtigkeitsregulierung oder Leistungsgrenze oder einer Kombination davon für die Lastvorrichtung (20) bestimmt; und

Abfangen zumindest eines Thermostatbefehls zum Kühlen, Kalthalten oder Heizen an dem Controller (18), und wobei der digitale Rückführ- bzw. Recycle-Zähler (1830) den Thermostatbefehl durch ein moduliertes Binärsignal ersetzt, das in einem "Ein"-Zustand oder "Aus"-Zustand arbeitet, und zwar zum Anpassen bzw. Einstellen der "Ein"- und "Aus"-Zustände des digitalen Rückführ- bzw. Recycle-Zählers mit einem digitalen Rückführ- bzw. Recycle-Zählerprogramm (1837) basierend auf der Bestimmung der angepassten Leistung.

14. Verfahren nach Anspruch 13, umfassend das Anwenden des Programms (1838) auf einen Einzel- oder Multikapazitätskompressor eines Klimatisierungssystems, wobei der Kompressor operabel ist, einen Kühlbefehl von einem Thermostat oder BMS zu empfangen, um Zuluft zu erzeugen, die zum Kühlen eines klimatisierten Raums verwendet wird, wobei das angewandte Programm den Verbrauch elektrischer Energie minimiert, während die Temperatur des klimatisierten Raums nahe dem Sollwert des OEM-Controllers gehalten wird.

15. Verfahren nach Anspruch 13, das in einem bedarfsgesteuerten bzw. Nachfragereaktion-Temperatursteuer- bzw. -regelmodus des Anwendens des Programms (1838) auf einen Einzel- oder Multikapazitätskompressor eines Klimatisierungssystems angewandt wird, der einem extern zugeführten Temperatursollwert unterliegt, der über entweder verdrahtete bzw. drahtgebundene oder drahtlose Vernetzung an den elektronischen Controller kommuniziert bzw. übermittelt wird.

16. Verfahren nach Anspruch 13, das in einem Leistungsbegrenzungsmodus des Anwendens des Programms (1838) auf einen Einzel- oder Multikapazitätskompressor eines Klimatisierungssystems angewandt wird, um die von dem Gerät gezogene Leistung dahingehend zu regeln, kleiner oder gleich einem Leistungsgrenzensollwert zu sein, wobei der Sollwert eine interne Parametereinstellung ist oder über einen verdrahteten bzw. drahtgebundenen oder drahtlosen Kommunikationsanschluss an den Controller kommuniziert bzw. übermittelt wird.

17. Verfahren nach Anspruch 13, wobei der Inbetriebnahmemodus fortlaufend und/oder periodisch erneut ausgeführt wird, und zwar automatisch oder manuell, um Temperatureffekte wechselnder Lasten in einem mathematischen Modell des für die Optimierung verwendeten Programms zu erfassen.

## Revendications

1. Dispositif d'unité de commande électronique (18) pour la commande automatique d'un système de chauffage, ventilation, climatisation ou réfrigération (HVAC&R) (1), comprenant un compteur de recyclage numérique (1830) qui est capable d'intercepter une commande de thermostat pour le refroidissement, la réfrigération ou le chauffage et de remplacer ladite commande de thermostat par un signal binaire modulé qui fonctionne dans un état « marche » ou un état « arrêt », et **caractérisé par**
un support de stockage lisible par ordinateur (1833) qui comprend un programme (1838) qui comprend un mode d'auto-configuration qui est capable de déterminer une performance de ligne de base dudit système HVAC&R (1) durant une phase de mise en service et est capable de déterminer une performance ajustée sur la base d'une consommation d'énergie, d'une régulation de température, d'une régulation d'humidité ou d'une limite de puissance ou toute combinaison de celles-ci, et dans lequel ledit programme (1838) est capable d'ajuster lesdits états « marche » et « arrêt » du compteur de recyclage numérique sur la base de ladite détermination de performance ajustée.

2. Dispositif d'unité de commande électronique (18) selon la revendication 1, dans lequel ledit dispositif d'unité de commande électronique (18) comprend en outre un mode prioritaire qui est capable d'ajuster ultérieurement ledit compteur de recyclage numérique (1830) pendant une période de temps.

3. Dispositif d'unité de commande électronique (18) selon la revendication 2, dans lequel ledit dispositif d'unité de commande électronique (18) est utilisable, dans lequel ledit mode prioritaire répond à des facteurs temporaires affectant la température ou l'humidité ou les deux.

4. Dispositif d'unité de commande électronique (18) selon la revendication 1, dans lequel ledit état « marche » a un signal de durée et de valeur constantes pour chaque état « marche » et ledit état « arrêt » a un signal de durée et de valeur constantes pour chaque état « arrêt » pour ladite performance ajustée.

5. Dispositif d'unité de commande électronique (18) selon la revendication 1, dans lequel ledit dispositif d'unité de commande électronique est utilisable, dans lequel ladite détermination de ladite performance ajustée a lieu deux fois ou plus.

6. Dispositif d'unité de commande électronique (18) selon la revendication 1, dans lequel ledit dispositif d'unité de commande électronique (18) est utilisable, dans lequel ladite phase de mise en service est répétée une ou plusieurs fois en utilisant une performance actuelle du système HVAC&R (1) comme la performance de ligne de base.

7. Dispositif d'unité de commande électronique (18) selon la revendication 1, dans lequel ledit dispositif d'unité de commande électronique (18) est utilisable, dans lequel ledit mode d'auto-configuration traite des données à partir de la performance de ligne de base ou de données de configuration pour fournir des estimations sur une température d'espace climatisé maximale, une température d'espace climatisé minimale, une bande morte d'hystérésis de température d'espace climatisé, un temps de cycle d'unité de commande et une valeur de consigne de température d'espace et en créant un modèle mathématique dynamique sur la base desdites données, et en déterminant un modèle mathématique dynamique ajusté à partir d'exigences de performance saisies sur la base d'une consommation d'énergie, d'une régulation de température, d'une régulation d'humidité ou d'une limite de puissance ou toute combinaison de celles-ci, et en ajustant ledit compteur de recyclage numérique (1830) sur la base dudit modèle mathématique dynamique ajusté.

8. Dispositif d'unité de commande électronique (18) selon la revendication 1, dans lequel ledit programme (1838) dudit dispositif d'unité de commande électronique (18) est utilisable en outre pour traiter des signaux de capteur relatifs à une pression de compresseur, un débit de fluide, ou les deux, détectés au niveau et reçus à partir d'une unité de charge de réfrigération ou de chauffage HVAC&R.

9. Système de chauffage, ventilation, climatisation ou réfrigération (HVAC&R) (1) comprenant une unité de chauffage, ventilation, climatisation ou réfrigération (20) et ledit dispositif d'unité de commande électronique (18) selon la revendication 1 qui remplace un signal de commande de thermostat dudit système HVAC&R (1) par ledit signal de commande binaire modulé provenant dudit dispositif d'unité de commande électronique (18).

10. Système pour la commande automatique d'un système de chauffage, ventilation, climatisation ou réfrigération (HVAC&R) (1), comprenant :

   un thermostat (14), un dispositif d'unité de commande électronique (18) selon la revendication 1, et au moins une unité de charge HVAC&R (20), connectée en fonctionnement à une ligne d'alimentation électrique (10), dans lequel
   l'unité de commande électronique (18) comprenant (a) un compteur de recyclage numérique (1830) qui est capable d'intercepter une commande de thermostat pour l'au moins unité de charge (20) et de remplacer ladite commande de thermostat par un signal binaire modulé qui fonctionne dans un état « marche » ou un état « arrêt », et (b) un support de stockage lisible par ordinateur (1833) qui comprend un programme (1838) qui comprend un mode d'auto-configuration qui est capable de déterminer une performance de ligne de base dudit système HVAC&R (1) durant une phase de mise en service et est capable de déterminer une performance ajustée sur la base d'une consommation d'énergie, d'une régulation de température, d'une régulation d'humidité ou d'une limite de puissance ou toute combinaison de celles-ci, et dans lequel ledit programme (1838) est capable d'ajuster lesdits états « marche » et « arrêt » du compteur de recyclage numérique sur la base de ladite détermination de performance ajustée.

11. Système selon la revendication 10, comprenant en outre au moins un capteur de température (22, 22A) et/ou d'humidité (22B) à distance qui est utilisable pour détecter une température et/ou une humidité dans une zone à climatiser en température ou en humidité et le dispositif d'unité de commande électronique (18) étant utilisable pour obtenir un signal de température à partir de celui-ci.

12. Système pour la commande automatique d'un système de chauffage, ventilation, climatisation ou réfrigération (HVAC&R) (1), comprenant :

   un thermostat (14), un dispositif d'unité de commande électronique (18) selon la revendication 1, et au moins un capteur de température distant (22, 22A), au moins une unité de charge HVAC&R (20), connectée en fonctionnement à une ligne d'alimentation électrique (10), dans lequel
   l'au moins un capteur de température distant (22, 22A) est utilisable pour détecter une température dans une zone à climatiser en température ou en humidité et transmettre un signal sur celui-ci à l'unité de commande électronique (18) via la ligne d'alimentation électrique (10) ; et
   l'unité de commande électronique (18) comprenant (a) un compteur de recyclage numérique (1830) qui est capable d'intercepter une commande de thermostat pour l'au moins unité de charge HVAC&R (20) et de remplacer ladite commande de thermostat par un signal binaire modulé qui fonctionne dans un état « marche » ou un état « arrêt », et (b) un support de stockage lisible par ordinateur (1833) qui comprend un programme (1838) qui comprend un mode d'auto-configuration qui est capable de déterminer une performance de ligne de base dudit système HVAC&R (1) durant une phase de mise en service et est capable de déterminer une performance ajustée sur la base d'une consommation d'énergie, d'une régulation de température, d'une régulation d'humidité ou d'une limite de puissance ou toute combinaison de celles-ci, et dans lequel ledit programme (1838) est capable d'ajuster lesdits états « marche » et « arrêt » du compteur de recyclage numérique sur la base de ladite détermination de performance ajustée.

13. Procédé pour la commande et la gestion automatique de la demande de charge et du fonctionnement d'une unité de charge HVAC&R (20) alimentée par électricité, dans lequel une unité de commande (18) comprenant un compteur de recyclage numérique (1830) est connectée électriquement dans une ligne de signal de commande (15, 24) entre un thermostat (14) pour un dispositif de charge (20) et un commutateur de commande de charge d'équipement (26) pour le dispositif de charge (20), **caractérisé par** les étapes suivantes :

l'exécution d'une phase de mise en service avec l'unité de commande (18) comprenant, tout en faisant fonctionner le dispositif de charge (20) pour une pluralité de cycles de fonctionnement, l'exécution d'un programme de mise en service (1838) obtenu à partir d'un support de stockage lisible par ordinateur (1833) qui est compris en outre dans l'unité de commande (18) qui comprend un programme de mode d'auto-configuration (1836), dans lequel le programme de mise en service (1838) détermine une performance de ligne de base de l'unité de charge HVAC&R (20) durant une phase de mise en service de fonctionnement du dispositif de charge (20), et détermine une performance ajustée sur la base d'une consommation d'énergie, d'une régulation de température, d'une régulation d'humidité ou d'une limite de puissance ou toute combinaison de celles-ci, pour le dispositif de charge (20) ; et

l'interception d'au moins une commande de thermostat pour le refroidissement, la réfrigération ou le chauffage au niveau de l'unité de commande (18) et ledit compteur de recyclage numérique (1830) remplaçant ladite commande de thermostat par un signal binaire modulé qui fonctionne dans un état « marche » ou un état « arrêt » pour ajuster les états « marche » et « arrêt » dudit compteur de recyclage numérique avec un programme de compteur de recyclage numérique (1837) sur la base de ladite détermination de performance ajustée.

14. Procédé selon la revendication 13, comprenant l'application du programme (1838) à un compresseur à capacité unique ou multiple d'un système de climatisation dans lequel le compresseur est utilisable pour recevoir une commande de refroidissement à partir d'un thermostat ou BMS pour produire de l'air d'alimentation utilisé pour refroidir un espace climatisé, dans lequel le programme appliqué minimise une consommation d'énergie électrique tout en maintenant une température d'espace climatisé proche de la valeur de consigne de l'unité de commande OEM.

15. Procédé selon la revendication 13, appliqué dans un mode de régulation de température en réponse à la demande d'application du programme (1838) à un compresseur à capacité unique ou multiple d'un système de climatisation soumis à une valeur de consigne de température fournie de l'extérieur, communiquée à l'unité de commande électronique via un réseau câblé ou sans fil.

16. Procédé selon la revendication 13, appliqué dans un mode de limitation de puissance d'application du programme (1838) à un compresseur à capacité unique ou multiple d'un système de climatisation pour réguler la puissance soutirée par l'équipement pour qu'elle soit inférieure ou égale à une valeur de consigne de limite de puissance, dans lequel la valeur de consigne est un paramétrage interne ou communiquée à l'unité de commande par le biais d'un port de communication câblé ou sans fil de celui-ci.

17. Procédé selon la revendication 13, dans lequel le mode de mise en service est ré-exécuté de manière continue et/ou périodique, automatiquement ou manuellement, pour capturer des effets de température de changement de charges dans un modèle mathématique du programme (1838) utilisé pour l'optimisation.

22A     22B

Remote
Temperature
Sensor

Remote
Humidity
Sensor

2

Remote
Temperature
Sensor

22

1

10

12  Meter

10

16

14

13

17

120 VAC Supply

Thermostat

Controller

Load
Unit

15

18

23

24

26

20

19  On-Board
User Input
Interface

Remote
User Input
Device

21

## FIG. 1

10

12  Meter

10

11

14

120 VAC Supply

13

15

17

Thermostat

Controller

Load
Unit

22C

18

23

24

26

20

15I

19  On-Board
User Input
Interface

Remote
User Input
Device

21

## FIG. 2

FIG. 3

1830       183

1832

Microprocessor

1833   Memory   1835
       1836
1838      1837

clock

1834

## FIG. 4

Baseboard    18

For Heating, Air
Conditioning,
Refrigeration
Applications

24-240VAC Input
from Thermostat

24-240VAC Output
from Compressor

226

APPLICATION
⊘ Heating
⊘ Air Conditioning
⊘ Refrigeration
SELECT

227

MODE
⊘ Commissioning
⊘ Normal Run
⊘ Extend Run
⊘ Bypass
SELECT

STATUS
⊘ Energy Saving
⊘ Fault

Zone Temperature
Sensor

22

120VAC Power

120VAC Power

X10 communication

FIG. 5

FIG. 6

**FIG. 7**

FIG. 8

Baseboard

Zone Temperature
Sensor

226

APPLICATION
- Heating
- Air Conditioning
- Refrigeration

SELECT

For Heating, Air
Conditioning,
Refrigeration
Applications 227

80211

MODE
- Commissioning
- Normal Run
- Extend Run
- Bypass

SELECT

STATUS
- Energy Saving
- Fault

24-240VAC Input from Thermostat

24-240VAC Output from Compressor

1801

22

120VAC Power

120VAC Power

X10 communication

DI-1  DI-2  DI-3  AI-1  AI-2  DO-1 DO-2   Data Acq CAN

I/O Expansion Module (optional)   30

Pace 3 I/O
Expansion
Module

Power    On Line    Comm

DI-1  DI-2  DI-3  AI-1  AI-2  DO-1 DO-2   Data Acq CAN

I/O Expansion Module (optional)   30A

Pace 3 I/O
Expansion
Module

Power    On Line    Comm

DI-1  DI-2  DI-3  AI-1  AI-2  DO-1 DO-2   Data Acq CAN

30B

FIG. 9

Additional I/O Expansion Modules
(optional)

403

Aircard
Modem

Router (Commercial Off
The Shelf)

402

1801

802.11

For Heating, Air
Conditioning,
Refrigeration
Applications

24-240VAC Input
from Thermostat

24-240VAC Output
from Compressor

APPLICATION
⊘ Heating
⊘ Air Conditioning
⊘ Refrigeration

SELECT

MODE
⊘ Commissioning
⊘ Normal Run
⊘ Extend Run
⊘ Bypass

SELECT

STATUS
⊘ Energy Saving
⊘ Fault

DI-1  DI-2  DI-3  AI-1  AI-2  DO-1 DO-2      Data Acq
                                              CAN

Baseboard

FIG. 10

FIG. 11

EP 2 502 121 B1

EP 2 502 121 B1

```
                              ┌──────────────┐
                              │    Start     │
                              └──────┬───────┘
                                     ↓
                              ┌──────────────┐
                    101 ────  │ Record OEM Data │
                              └──────┬───────┘
                                     ↓
                              ┌──────────────┐              ┌──────────────────┐
                    102 ────  │ Create Model from │   108 ──│ Initial Estimate of │
                              │     Data     │              │ "on" & "off"     │
                              └──────┬───────┘              │    durations     │
                                     ↓                      └──────────────────┘
┌───────────────┐  ┌──────────────┐  ┌──────────────┐ ── 103
│ Mode of        │→ │ Performance Index │→│ Evaluate     │
│ Operation      │  │   Weights    │  │ Performance Index │
└───────────────┘  └──────────────┘  └──────┬───────┘
   104               105                     ↓
                              ┌──────────────┐   ┌──────────────┐
                    106 ────  │ Evaluate Gradient │110│ Run Model with │
                              │ of Performance    │───│ Updated control │
                              │   Index      │       │   signal     │
                              └──────┬───────┘       └──────────────┘
                                     ↓                      ↑
                                  ◇◇◇◇◇◇          ┌──────────────┐
                    107 ──── ◇  Minimum?  ◇ ─No→ │ Update "on" & "off" │ ── 109
                                  ◇◇◇◇◇◇          │ duration Estimates │
                                     │             └──────────────┘
                                    Yes
                                     ↓
                              ┌──────────────┐
                    111 ────  │    DRC       │
                              │  Program     │
                              └──────────────┘
```

100

FIG. 12

21

211

User Interface

Display 212

Control
Pad 213

23

Controller 18

# FIG. 13

21

211

(1) Minimum Energy Control

(2) Demand Response Control

(3) Power Limiting Control

Done   EDIT   Cancel

FIG. 14

T-hi = 68degF

T*

T-lo = 66degF

1

0

16 | OEM Control Command

t0    t1                        t2

## FIG. 15

T-hi = 68degF

T*

T-lo = 66degF

1

0

9 | 6.5 | Pace Control 1

t0

## FIG. 16

T-hi = 68degF

T*

T-lo = 66degF

1

0

4 | 4 | Pace Control 2

t0

## FIG. 17

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61262281 A
- US 79411610 A
- US 5687139 A
- US 5426620 A